# FASCICULE DE BREVET EUROPEEN

(11) **EP 4 449 018 B1**
(45) Date de publication et mention de la délivrance du brevet: **11.02.2026**
(21) Numéro de dépôt: 22834900.7
(22) Date de dépôt: 07.12.2022
(51) Int. Cl.: F23C 99/00

(54) **INSTALLATION ET PROCEDE DE COMBUSTION EN BOUCLE COMPORTANT UN REACTEUR AIR CYCLONIQUE**
KREISLAUFVERBRENNUNGSANLAGE UND VERFAHREN MIT EINEM ZYKLON-LUFTREAKTOR
LOOP COMBUSTION PLANT AND METHOD COMPRISING A CYCLONE AIR REACTOR

(30) Priorité: 17.12.2021 FR 2113898
(43) Date de publication de la demande: 23.10.2024
(73) Titulaire: IFP Energies nouvelles, 92500 Rueil-Malmaison (FR); TotalEnergies OneTech, 92400 Courbevoie (FR)
(72) Inventeur: LAROCHE, Catherine, 92852 RUEIL-MALMAISON CEDEX (FR); GUILLOU, Florent, 92852 RUEIL-MALMAISON CEDEX (FR); TEBIANIAN, Sina, 92852 RUEIL-MALMAISON CEDEX (FR)
(74) Mandataire: IFP Energies nouvelles
(86) Numéro de dépôt international: PCT/EP2022/084839
(87) Numéro de publication internationale: WO 2023/110589

(56) Documents cités:
- EP-A1- 2 644 994
- FR-A- 540 395
- US-A- 4 444 568
- US-A1- 2009 072 538

## Description

### Domaine technique

La présente invention concerne le domaine de la combustion en boucle chimique de charges hydrocarbonées par oxydo-réduction en boucle chimique (« CLC » pour Chemical Looping Combustion selon la terminologie anglo-saxonne) opérant en lit fluidisé, pouvant produire de l'énergie, du gaz de synthèse et/ou de l'hydrogène. En particulier la présente invention porte sur une nouvelle installation et procédé CLC dans lesquels l'oxydation du porteur du porteur d'oxygène est réalisée dans un réacteur cyclonique.

### Technique antérieure

Un procédé CLC consiste à mettre en œuvre des réactions d'oxydo-réduction d'une masse active, typiquement un oxyde métallique, aussi appelé solide porteur d'oxygène ou porteur d'oxygène, pour décomposer la réaction de combustion en deux réactions successives : une première réaction d'oxydation du porteur d'oxygène au contact d'un gaz oxydant, typiquement de l'air, et une deuxième réaction de réduction du porteur d'oxygène au contact de la charge dont on souhaite la combustion. Le procédé CLC s'apparente à l'oxycombustion à la différence principale que la combustion n'est pas alimentée par un flux d'oxygène pur dédié, comme dans le cas de l'oxycombustion, mais par le porteur d'oxygène jouant le rôle de transporteur d'oxygène.

Typiquement, les particules sont oxydées au contact du gaz oxydant, e.g. de l'air, dans une première zone réactionnelle, appelée réacteur d'oxydation ou réacteur air. Elles sont ensuite transportées dans une seconde zone réactionnelle appelée réacteur de combustion ou réacteur fuel où elles sont mises en contact avec une charge hydrocarbonée solide, liquide ou gazeuse dont on souhaite effectuer la combustion. L'oxygène transporté par les particules de porteur d'oxygène alimente la combustion de la charge dans le réacteur fuel. Il en résulte un effluent gazeux formé par la combustion de la charge et un flux de particules réduites. Les particules sont renvoyées au réacteur air pour y être oxydées à nouveau, fermant ainsi la boucle.

Les procédés CLC sont connus dans le domaine de la production d'énergie, des turbines à gaz, des chaudières et des fours, notamment pour l'industrie pétrolière, verrière et cimentière.

En particulier, le procédé CLC permet de produire de l'énergie (vapeur, électricité...) par récupération de la chaleur dégagée par les réactions de combustion tout en facilitant la capture du dioxyde de carbone (CO₂) émis lors de la combustion grâce à la production de fumées riches en CO₂. Dans le procédé CLC, les fumées de combustion produites dans le réacteur fuel sont en effet dépourvues d'oxygène et d'azote. Le captage du CO₂ peut en effet se faire après condensation de la vapeur d'eau et compression des fumées, et celui-ci peut alors être stocké, par exemple dans des formations géologiques, ou de l'utiliser comme réactif dans d'autres procédés, ou encore être valorisé en l'employant par exemple pour améliorer le rendement des exploitations pétrolières dans des procédés de récupération assistée du pétrole (EOR pour Enhanced Oil Recovery en anglais) ou de gaz (EGR pour Enhanced Gas Recovery en anglais).

Le procédé CLC peut également permettre la production de gaz de synthèse, voire d'hydrogène, en contrôlant les conditions opératoires de la combustion (rapport stœchiométrique et température) et en mettant en œuvre les purifications requises en aval du procédé de combustion. Ce mode de combustion peut aussi permettre la production d'un flux très riche en azote, qui correspond à l'air appauvri obtenu à l'issue de l'oxydation de la masse active dans le réacteur air. Selon le degré de pureté atteint, ce flux d'azote peut être valorisé dans diverses applications, notamment dans le domaine de l'industrie pétrolière. Il peut par exemple être utilisé en raffinerie en tant que gaz inerte dans différents procédés de raffinage du pétrole ou pour le traitement des eaux de production, ou en tant que gaz injecté dans le sous-sol dans des procédés EOR.

Dans un contexte d'une demande énergétique mondiale croissante, le procédé CLC fournit donc une solution attractive de captage du CO₂ en vue de sa séquestration ou de sa valorisation pour d'autres procédés, afin de limiter l'émission de gaz à effet de serre préjudiciable à l'environnement

Le porteur d'oxygène est un matériau solide qui se présente sous la forme de particules fluidisables, avec une taille de particules typique comprise entre 50 µm et 500 µm. Les particules sont mises en contact dans les zones réactionnelles, avec soit le gaz oxydant, soit la charge, sous forme de lits fluidisés à haute température, et sont généralement transportées d'une zone à l'autre sous une forme fluidisée. La technologie du lit fluidisé circulant est généralement utilisée pour permettre le passage continu du porteur d'oxygène de son état oxydé dans le réacteur air à son état réduit dans le réacteur fuel.

Dans un procédé CLC, les réacteurs air et fuel comportent donc chacun des phases gaz et solide qui forment un mélange gaz/solide pouvant être ascendant. Dans le réacteur air notamment, ce mélange se déplace généralement à grande vitesse (plusieurs mètres par seconde pour la vitesse superficielle du gaz, par exemple entre 2 m/s et 15 m/s), le réacteur air étant typiquement un réacteur de type riser, formant un conduit sensiblement allongé et vertical (par exemple de diamètre compris entre 1 m et 6 m pour une hauteur comprise entre 10 m et 30 m), et opérant en lit fluidisé dilué (régime de fluidisation rapide ou de transport pneumatique).

En sortie du réacteur air, le mélange gaz/solide est séparé dans un cyclone afin de séparer respectivement le porteur d'oxygène de l'air déplété. Des cyclones ou autres dispositifs de séparation gaz/solide sont aussi utilisés en sortie du réacteur fuel pour séparer le porteur d'oxygène des fumées de combustion.

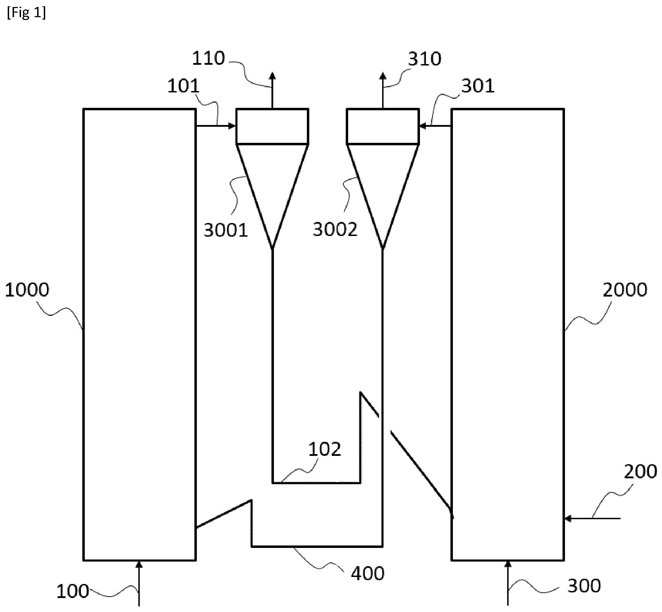

La figure 1 représente une installation CLC selon l'art antérieur. Le porteur d'oxygène sous sa forme réduite 400 est introduit dans le réacteur air 1000 et mis en contact avec un flux d'air 100. Le solide porteur d'oxygène réagit avec l'oxygène de l'air pour former un mélange gaz/solide 101 composé de solide porteur d'oxygène oxydé et d'air déplété, i.e. dont la concentration en oxygène a été réduite après réaction avec le porteur d'oxygène. Le mélange 101 est introduit dans un cyclone 3001 qui produit un effluent gazeux 110 comprenant essentiellement l'air déplété et un flux de solide 102 comprenant essentiellement le porteur d'oxygène dans sa forme oxydée. Ce flux de solide 102 est introduit dans le réacteur fuel 2000 où il est mis au contact d'une charge hydrocarbonée 200 au sein d'un lit fluidisé, typiquement au moyen d'un gaz de fluidisation 300. Selon la charge utilisée, le gaz de fluidisation 300 peut participer à la gazéification de la charge hydrocarbonée 200, en particulier si celle-ci est solide ou liquide. Le gaz de fluidisation 300 peut être utile, mais n'est pas indispensable, si la charge hydrocarbonée 200 introduite dans le réacteur est gazeuse. La charge sous forme gazeuse, qui peut être une charge hydrocarbonée 200 gazeuse introduite dans le réacteur 2000 ou le produit de la gazéification d'une charge hydrocarbonée 200 solide ou liquide, réagit avec l'oxygène contenu dans le porteur d'oxygène. Il en résulte un mélange gaz/solide 301 comportant le porteur d'oxygène réduit, des fumées de combustion de la charge et du gaz de fluidisation, et éventuellement des imbrûlés gazeux ou solides. Ce mélange gaz/solide 301 est séparé dans un dispositif de séparation gaz/solide 3002, typiquement un cyclone, en un flux de solide comportant essentiellement le porteur d'oxygène réduit 400 et un mélange gazeux 310 comportant les fumées de combustion et le gaz de fluidisation.

Les réacteurs air et fuel et les dispositifs de séparation gaz/solide associés sont donc des éléments primordiaux de l'installation et du procédé CLC. La fonction assurée par chacun est essentielle au fonctionnement du CLC, et toute amélioration portant sur ces éléments peut accroitre considérablement l'attractivité de cette technologie de production d'énergie permettant le captage de CO₂.

EP 2 644 994 A1 montre un système de combustion en boucle chimique comprenant un réacteur à combustible, un réacteur à air, et un réacteur de post-oxydation.

### Objectifs et Résumé de l'invention

Dans ce contexte, la présente invention vise à répondre à la problématique générale de la production d'énergie par combustion d'une charge hydrocarbonée intégrant un captage du CO₂, et vise en particulier à fournir une installation CLC plus compacte par rapport à une installation CLC classique telle que décrite ci-dessus, et par conséquent potentiellement à un cout d'investissement (CAPEX) réduit. Un autre objectif de la présente invention est de permettre la transformation d'unités de combustion industrielles existantes, mettant par exemple en œuvre une chaudière, en unité de combustion en boucle chimique.

Dans ce contexte, et pour atteindre au moins l'un des objectifs susvisés, parmi d'autres, la présente invention propose, selon un premier aspect, une installation CLC d'une charge hydrocarbonée mettant en œuvre un solide porteur d'oxygène sous forme de particules comportant au moins :
- un réacteur de réduction configuré pour opérer en lit fluidisé et effectuer la combustion de ladite charge hydrocarbonée au contact dudit porteur d'oxygène ;
- au moins un réacteur d'oxydation cyclonique configuré pour oxyder ledit porteur d'oxygène réduit provenant dudit réacteur de réduction par mise en contact avec un gaz oxydant et pour séparer ledit porteur d'oxygène oxydé dudit gaz oxydant appauvri en oxygène ;
- des lignes de circulation dudit porteur d'oxygène entre ledit réacteur de réduction et ledit au moins un réacteur d'oxydation cyclonique.

Selon un ou plusieurs modes de réalisation, ledit au moins un réacteur d'oxydation cyclonique comporte :
- une chambre cylindro-conique comportant une portion supérieure cylindrique surmontant une portion inférieure tronconique inversée,
- une conduite d'arrivée d'un mélange gazeux comprenant des particules du porteur d'oxygène et du gaz oxydant, ladite conduite d'arrivée étant munie d'un conduit d'injection principal de gaz oxydant et ladite conduite d'arrivée débouchant dans ladite portion supérieure cylindrique ;
- une conduite de sortie pour un flux gazeux appauvri en oxygène positionnée au sommet de la portion supérieure cylindrique ;
- une conduite d'évacuation d'un flux de particules de porteur d'oxygène positionnée au fond de la portion inférieure tronconique inversée.

Selon un ou plusieurs modes de réalisation, l'installation comporte plusieurs réacteurs d'oxydation cycloniques configurés pour opérer en série et/ou en parallèle.

Selon un ou plusieurs modes de réalisation, l'installation comporte deux réacteurs d'oxydation cycloniques configurés pour opérer en série.

Selon un ou plusieurs modes de réalisation, l'installation comporte au moins deux réacteurs d'oxydation cycloniques configurés pour opérer en série, et dans laquelle la conduite de sortie d'un deuxième réacteur d'oxydation cyclonique positionné en aval d'un premier réacteur d'oxydation cyclonique est connectée à la conduite d'arrivée dudit premier réacteur d'oxydation cyclonique pour former le conduit d'injection principal de gaz oxydant alimentant ledit premier réacteur d'oxydation cyclonique.

Selon un ou plusieurs modes de réalisation, la conduite d'arrivée dudit au moins un réacteur d'oxydation cyclonique est munie d'au moins un conduit d'injection secondaire de gaz oxydant, de préférence disposé sur une paroi inférieure de ladite conduite d'arrivée.

Selon un ou plusieurs modes de réalisation, l'installation comporte un cyclone disposé en aval et directement connecté audit réacteur de réduction, configuré pour recevoir un mélange gaz/solide provenant dudit réacteur de réduction et effectuer la séparation entre le porteur d'oxygène réduit et des fumées de combustion, ledit cyclone comportant une conduite de sortie pour le porteur d'oxygène réduit connectée audit moins un réacteur d'oxydation cyclonique.

Selon un ou plusieurs modes de réalisation, l'installation comporte :
- un dispositif de séparation solide/solide disposé en aval et directement connecté audit réacteur de réduction, ledit dispositif de séparation solide/solide étant configuré pour opérer en lit fluidisé, pour recevoir un mélange gaz/solide issu dudit réacteur de réduction, et pour effectuer la séparation entre les particules du porteur d'oxygène réduit et des particules d'imbrûlés contenues dans ledit mélange gaz/solide, et
- au moins un cyclone disposé en aval dudit dispositif de séparation solide/solide et configuré pour recevoir un flux gazeux comportant lesdites particules d'imbrûlés et pour effectuer la séparation entre lesdites particules d'imbrûlés et des fumées de combustion, ledit cyclone comportant de préférence une conduite de sortie pour lesdites particules d'imbrûlés connectée audit réacteur de réduction.

Selon un autre aspect, la présente invention propose un procédé CLC d'une charge hydrocarbonée mettant en œuvre un solide porteur d'oxygène sous forme de particules, dans lequel :
- on effectue une combustion de la charge hydrocarbonée par mise en contact du porteur d'oxygène au sein d'un réacteur de réduction opéré en lit fluidisé ;
- on effectue une oxydation du porteur d'oxygène ayant séjourné dans le réacteur de réduction par mise en contact avec un gaz oxydant, de préférence de l'air, au sein d'au moins un réacteur d'oxydation cyclonique, et on effectue la séparation entre ledit porteur d'oxygène oxydé et le gaz oxydant appauvri en oxygène au sein dudit réacteur d'oxydation cyclonique avant de renvoyer ledit porteur d'oxygène oxydé vers le réacteur de réduction.

Selon une ou plusieurs mises en œuvre :
- on mélange un gaz oxydant et le porteur d'oxygène issu du réacteur de réduction dans une conduite d'arrivée dudit au moins un réacteur d'oxydation cyclonique,
- on envoie ledit mélange gazeux comportant le porteur d'oxygène dans une portion supérieure cylindrique d'une chambre cylindro-conique dudit réacteur d'oxydation cyclonique, ladite chambre cylindro-conique comportant la portion supérieure cylindrique surmontant une portion inférieure tronconique inversée ;
- on effectue l'oxydation dudit porteur d'oxygène au contact du gaz oxydant et la séparation entre le porteur d'oxygène oxydé et le gaz oxydant appauvri en oxygène au sein de ladite chambre cylindro-conique ;
- on évacue ledit gaz oxydant appauvri en oxygène par une conduite de sortie positionnée au sommet de la portion supérieure cylindrique ;
- et on évacue un flux de porteur d'oxygène oxydé par une conduite d'évacuation positionnée au fond de la portion inférieure tronconique inversée.

Selon une ou plusieurs mises en œuvre, on effectue l'oxydation du porteur d'oxygène issu du réacteur de réduction dans deux réacteurs d'oxydation cycloniques opérés en série et/ou en parallèle.

Selon une ou plusieurs mises en œuvre, on utilise le gaz oxydant appauvri en oxygène évacué par la conduite de sortie d'un deuxième réacteur d'oxydation cyclonique positionné en aval d'un premier réacteur d'oxydation cyclonique pour former le mélange gazeux dans la conduite d'arrivée dudit premier réacteur d'oxydation cyclonique et oxyder le porteur d'oxygène issu du réacteur de réduction au sein dudit premier réacteur d'oxydation cyclonique.

Selon une ou plusieurs mises en œuvre, on envoie un mélange gaz/solide provenant du réacteur de réduction dans un cyclone disposé en aval et directement connecté audit réacteur de réduction pour effectuer une séparation entre le porteur d'oxygène réduit et des fumées de combustion contenues dans ledit mélange gaz/solide, et on envoie le porteur d'oxygène réduit vers ledit au moins un réacteur d'oxydation cyclonique.

Selon une ou plusieurs mises en œuvre, la charge hydrocarbonée est une charge solide sous forme de particules, choisie de préférence dans la liste constituée par le charbon, le coke, le petcoke, la biomasse, les sables bitumineux et les déchets ménagers, et dans lequel :
- on envoie un mélange gaz/solide provenant du réacteur de réduction dans un dispositif de séparation solide/solide directement connecté audit réacteur de réduction et opéré en lit fluidisé pour effectuer la séparation entre le porteur d'oxygène réduit et des particules d'imbrûlés contenues dans ledit mélange gaz/solide ;
- on envoie dans au moins un cyclone un flux gazeux issu du séparateur solide/solide et comportant lesdites particules d'imbrûlés pour effectuer la séparation entre lesdites particules d'imbrûlés et des fumées de combustion ;
- on envoie le porteur d'oxygène réduit vers ledit au moins un réacteur d'oxydation cyclonique, de préférence au moyen d'une vanne en L ;
- optionnellement on envoie lesdites particules d'imbrûlés vers ledit réacteur de réduction.

Selon une ou plusieurs mises en œuvre, le temps de résidence du porteur d'oxygène dans ledit au moins un réacteur d'oxydation est inférieur ou égal à 30 secondes.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Liste des figures

La figure 1, déjà décrite, représente schématiquement une installation CLC selon l'art antérieur.
La figure 2 est un schéma de l'installation CLC selon un ou plusieurs modes de réalisation de la présente invention comprenant un réacteur d'oxydation cyclonique.
La figure 3 est un schéma de l'installation CLC selon un ou plusieurs modes de réalisation de la présente invention comprenant deux réacteurs d'oxydation cycloniques successifs.
La figure 4 est un schéma de l'installation CLC selon un ou plusieurs modes de réalisation de la présente invention comprenant deux réacteurs d'oxydation cycloniques successifs dont le premier est alimenté avec un gaz oxydant appauvri en oxygène issu du second réacteur d'oxydation cyclonique.
La figure 5 est un schéma de l'installation CLC selon un ou plusieurs modes de réalisation de la présente invention adaptés à la combustion d'une charge hydrocarbonée solide, comprenant un réacteur d'oxydation cyclonique et un dispositif de séparation solide/solide en sortie du réacteur fuel.

Sur les figures, les mêmes références désignent des éléments identiques ou analogues.

### Description des modes de réalisation

La présente l'invention propose une nouvelle installation et un nouveau procédé CLC d'une charge hydrocarbonée dans laquelle le réacteur d'oxydation a une structure de cyclone, et est appelé réacteur d'oxydation cyclonique dans la présente description, ayant à la fois pour fonction d'oxyder les particules du porteur d'oxygène lors du procédé CLC, et de séparer les particules du porteur oxydées du gaz ayant servi à leur oxydation, avant que celles-ci soient à nouveau envoyées dans le réacteur de réduction. Un tel réacteur d'oxydation cyclonique permet avantageusement de combiner les fonctions remplies dans une installation CLC classique par deux dispositifs : le réacteur d'oxydation qui opère en lit fluidisé et qui est généralement un riser, et le cyclone en sortie du réacteur d'oxydation qui opère la séparation entre les particules du porteur et l'air déplété. L'installation CLC selon l'invention est ainsi plus compacte, et les couts d'investissement réduits. Le procédé selon l'invention est notamment apte à mettre en œuvre l'installation selon l'une quelconque des variantes ou des combinaisons de variantes décrites ci-après.

L'invention, porte sur une installation et un procédé CLC tels que décrits en détail plus bas. Cependant, on ne sort pas du cadre de l'invention en mettant en œuvre le réacteur d'oxydation cyclonique décrit pour l'installation/procédé CLC dans d'autres installations/procédés d'oxydo-réduction en boucle chimique basés sur une technologie de lit fluidisé circulant tels que les installations/procédés de reformage en boucle chimique (CLR en référence à l'expression « Chemical Looping Reforming » selon la terminologie anglo-saxonne) ou les installations/procédés de CLOU (en référence à l'expression « Chemical Looping Oxygen Uncoupling » selon la terminologie anglo-saxonne).

Dans la présente description, il est fait référence à des installations/procédés d'oxydo-réduction en boucle chimique (CLC, CLR, CLOU), en particulier CLC, en lit fluidisé circulant, c'est-à-dire dans lesquels des régimes de fluidisation du solide porteur d'oxygène sous forme de particules permettent son transport et sa circulation dans l'installation.

Dans la présente description, les expressions « solide porteur d'oxygène », « porteur d'oxygène », « matériau transporteur d'oxygène », « masse active oxydo-réductrice » ou de manière abrégée « masse active » sont équivalentes. La masse oxydo-réductrice est dite active en rapport avec ses capacités réactives, dans le sens où elle est apte à jouer son rôle de transporteur d'oxygène dans le procédé CLC en captant et libérant de l'oxygène.

Il convient de noter que, de manière générale, les termes oxydation et réduction sont utilisés en relation avec l'état respectivement oxydé ou réduit du porteur d'oxygène. Le réacteur d'oxydation cyclonique, aussi appelé réacteur air cyclonique, est celui dans lequel le porteur d'oxygène est oxydé et séparé du gaz oxydant ayant servi à son oxydation, et le réacteur de réduction, aussi appelé réacteur fuel ou réacteur de combustion, est le réacteur dans lequel le porteur d'oxygène est réduit. Le réacteur de réduction opère en lit fluidisé, le réacteur d'oxydation cyclonique fonctionne comme un cyclone classique d'un point de vue hydrodynamique, et le porteur d'oxygène circule entre le réacteur d'oxydation cyclonique et le réacteur de réduction. La technologie du lit fluidisé circulant est utilisée pour permettre le passage continu du porteur d'oxygène de son état oxydé dans le réacteur d'oxydation cyclonique à son état réduit dans le réacteur de réduction.

Dans la suite de la description et dans les revendications, les positions (« fond », « sommet », « au-dessus », « en-dessous », « horizontal », « vertical », « moitié inférieure », etc.) des différents éléments sont définies par rapport aux réacteurs et divers dispositifs de l'installation en position de fonctionnement.

Dans la présente description, le terme « comprendre » est synonyme de (signifie la même chose que) « inclure » et « contenir », et est inclusif ou ouvert et n'exclut pas d'autres éléments qui ne seraient pas mentionnés. Il est entendu que le terme « comprendre » inclut le terme exclusif et fermé « consister ».

Dans la présente description, l'expression « compris entre ... et ... » signifie que les valeurs limites de l'intervalle sont incluses dans la gamme de valeurs décrite, sauf spécifié autrement.

En outre, dans la présente description, les termes « essentiellement » ou « sensiblement » correspondent à une approximation de ± 5%, préférablement de ±1%, très préférablement de ± 0,5%. Par exemple, un effluent comprenant essentiellement ou étant constitué des composés A correspond à un effluent comprenant au moins 95% en poids de composés A.

Des modes de réalisation de l'installation et du procédé CLC sont décrits ci-après en détail. De nombreux détails spécifiques sont exposés afin de fournir une compréhension plus approfondie de l'invention. Cependant, il apparaîtra à l'homme du métier que l'installation et le procédé CLC peuvent être mis en œuvre sans tous ces détails spécifiques. Dans d'autres cas, des caractéristiques bien connues n'ont pas été décrites en détail pour éviter de compliquer inutilement la description.

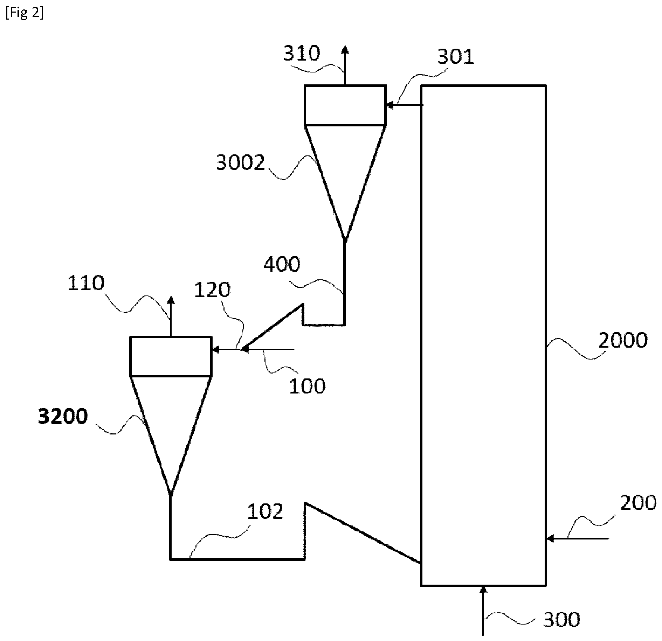

En référence à la figure 2, l'installation CLC selon un ou plusieurs modes de réalisation de la présente invention comprend un réacteur de réduction 2000 configuré pour opérer en lit fluidisé et effectuer la combustion d'une charge hydrocarbonée 200 au contact d'un porteur d'oxygène sous forme de particules 102, dans son état réduit. L'installation comprend également un réacteur d'oxydation cyclonique 3200 configuré d'une part pour oxyder le porteur d'oxygène réduit 400 provenant du réacteur de réduction par mise en contact avec un gaz oxydant 100, et d'autre part pour séparer le porteur d'oxygène oxydé du gaz oxydant appauvri en oxygène 110. En d'autres termes, le réacteur d'oxydation cyclonique réalise simultanément dans un unique dispositif deux fonctions : l'oxydation du porteur d'oxygène et la séparation du porteur d'oxygène du gaz oxydant. L'installation comprend également des lignes de circulation du porteur d'oxygène entre le réacteur de réduction 2000 et le réacteur d'oxydation cyclonique 3200.

On effectue une oxydation du porteur d'oxygène 400 ayant séjourné dans le réacteur de réduction 2000 par mise en contact avec le gaz oxydant 100 au sein du réacteur d'oxydation cyclonique 3200, et on effectue la séparation entre le porteur d'oxygène oxydé et le gaz oxydant appauvri en oxygène au sein dudit réacteur d'oxydation cyclonique 3200, avant de renvoyer le porteur d'oxygène oxydé vers le réacteur de réduction 2000. Le réacteur d'oxydation cyclonique 3200 est détaillé plus loin dans la description, après la description du réacteur de réduction 2000.

Dans un souci de simplification, la représentation de la figure 2 ne comprend pas tous les équipements pouvant faire partie de l'installation CLC. D'autres dispositifs que ceux représentés, notamment pour la séparation solide/gaz, la séparation solide/solide, l'échange de chaleur, la mise en pression, l'étanchéité des gaz entre les réacteurs, i.e. l'étanchéité des atmosphères oxydante et réductrice (ex : siphons), le stockage du solide, le contrôle des flux solides (ex : vannes mécaniques ou pneumatiques) ou les éventuelles recirculations de matière autour des réacteurs d'oxydation et de combustion, peuvent être mis en œuvre.

Dans le réacteur de réduction 2000, la charge hydrocarbonée 200 est mise en contact à co-courant avec le porteur d'oxygène sous forme de particules 102 pour réaliser la combustion de ladite charge par réduction du porteur d'oxygène.

Le porteur d'oxygène MₓO_{y}, M représentant un métal, est réduit à l'état MₓO_{y-2n-m/2}, par l'intermédiaire de la charge hydrocarbonée CₙHₘ, qui est corrélativement oxydée en CO₂ et H₂O, selon la réaction (1) ci-dessous, ou éventuellement en mélange CO + H₂ selon les proportions utilisées.

[Math 1] CₙHₘ + MₓO_{y} **→** n CO₂+ m/2 H₂O + MₓO_{y-2n-m/2}

La combustion totale de la charge hydrocarbonée est généralement visée.

La combustion de la charge 200 au contact du porteur d'oxygène est réalisée à une température généralement comprise entre 600°C et 1400°C, préférentiellement entre 800°C et 1000°C. Le temps de contact varie selon le type de charge combustible utilisée. Il varie typiquement entre 1 seconde et 20 minutes, par exemple de préférence entre 1 minute et 10 minutes, et plus préférentiellement entre 1 minute et 8 minutes pour une charge solide ou liquide, et par exemple de préférence de 1 à 20 secondes pour une charge gazeuse.

Les charges hydrocarbonées (ou combustibles) traitées peuvent être des charges hydrocarbonées solides, gazeuses ou liquides, et de préférence des charges solides ou gazeuses. Les charges solides peuvent être choisies parmi le charbon, le coke, le coke de pétrole (« pet-coke » en anglais), la biomasse, les sables bitumineux, le brai dur (ou brai de désasphaltage, aussi appelé « pitch » en anglais) et les déchets ménagers. Les charges gazeuses sont de préférence composées essentiellement de méthane, par exemple du gaz naturel ou un biogaz. Les charges liquides peuvent être choisies parmi du pétrole, du bitume, le diesel, l'essence, le brai. Selon leur température de fusion, les brais peuvent s'apparenter à une charge solide ou liquide. De préférence la charge hydrocarbonée traitée est une charge solide ou gazeuse, telle qu'énoncée ci-dessus.

Le réacteur de réduction opère en lit fluidisé. Il comprend au moins un système d'injection d'un gaz de fluidisation 300. Selon la charge hydrocarbonée 200 utilisée, le gaz de fluidisation 300 peut participer à la gazéification de la charge hydrocarbonée, en particulier si celle-ci est solide ou liquide. Dans le réacteur de réduction 2000, le gaz de fluidisation peut être du CO₂, qui peut être du CO₂ produit lors de la combustion et recyclé, ou de la vapeur d'eau.

Le réacteur de réduction 2000 est de préférence configuré de manière à comprendre un lit fluidisé dense. De préférence, la vitesse superficielle du gaz dans le lit fluidisé dense du réacteur de réduction, qu'on appelle aussi ici vitesse superficielle du gaz opérationnelle U_{g}, est comprise entre 0,1 m/s et 3 m/s, de préférence entre 0,3 m/s et 2 m/s.

A titre d'exemple, le réacteur de réduction 2000 peut avoir un diamètre D_{R} compris entre 1 m et 10 m. De préférence, le réacteur de réduction a un rapport hauteur H_{R} sur diamètre D_{R} compris entre 0,5 et 8, de préférence compris entre 1 et 5, encore plus préférentiellement compris entre 2 et 4. Il en est de même pour le rapport de la hauteur du lit fluidisé dense dans le réacteur sur le diamètre du réacteur. Par lit fluidisé dense, on entend un lit fluidisé gaz/solide fonctionnant en régime bouillonnant (aussi appelé régime à bulles ou bullage) ou en régime turbulent. La fraction volumique de solide dans un tel lit fluidisé dense est généralement comprise entre 0,25 et 0,50.

Dans le cas de la combustion de charges hydrocarbonées solides, un temps de contact de la charge avec les particules du porteur d'oxygène suffisamment long est généralement nécessaire pour tendre vers la combustion totale, et implique une première phase de gazéification de la charge solide, suivie d'une combustion de la charge gazéifiée. Les deux phases peuvent être effectuées dans le lit fluidisé dense du réacteur de réduction. Selon une autre configuration, la première phase peut être effectuée dans le lit fluidisé dense du réacteur de réduction, et la deuxième phase être effectuée dans une autre zone de combustion, par exemple au sein du même réacteur dans une zone surmontant le lit dense et opérant en lit fluidisé dilué ou dans un réacteur distinct recevant la charge gazéifiée et la mettant au contact du porteur d'oxygène, au sein d'un lit fluidisé dense ou dilué.

Le réacteur de réduction 2000 peut ainsi être configuré de manière à comprendre un lit fluidisé dilué. Par lit fluidisé dilué, on entend un lit fluidisé gaz/solide fonctionnant en régime de fluidisation rapide ou en régime de transport pneumatique. La fraction volumique de solide est généralement inférieure à 0,25.

Dans le cas de la combustion en boucle chimique de charges gazeuses par exemple, le temps de contact nécessaire entre le porteur d'oxygène et la charge étant moins important que dans le cas de charges solides ou liquides, un réacteur ou une partie de réacteur de type « riser », formant un conduit sensiblement allongé et vertical, et opérant en lit fluidisé dilué, peut suffire pour réaliser la combustion de la charge, et transporter les particules.

Dans le réacteur ou la partie du réacteur de réduction opérant en lit fluidisé dilué, la vitesse est de préférence supérieure à 3 m/s et inférieure à 30 m/s, plus préférentiellement comprise entre 5 et 15 m/s, de façon à faciliter le transport de l'ensemble des particules tout en minimisant les pertes de charge de manière à optimiser le rendement énergétique du procédé.

La géométrie du réacteur de réduction peut être parallélépipédique, typiquement un parallélépipède rectangle, cylindrique ou toute autre géométrie tridimensionnelle comprenant de préférence une symétrie de révolution. Par cylindrique on fait référence à un cylindre de révolution. Par exemple, le réacteur de réduction est cylindrique ou a une forme de parallélépipède rectangle. Dans ce dernier cas, le diamètre D_{R} du réacteur doit être compris comme un diamètre équivalent (section de passage équivalente).

Les matériaux utilisés pour réaliser le réacteur et ses éléments constitutifs (admission(s), évacuation(s), sortie(s), etc.) peuvent être choisis parmi les matériaux réfractaires, par exemple de type béton réfractaire, brique réfractaire ou céramique, les aciers haute température, par exemple de type Hastelloy^{®}, Incoloy^{®}, Inconel^{®} ou Manaurite^{®}, ou des aciers conventionnels, par exemple de type acier inoxydable ou acier au carbone combinés à des matériaux réfractaires ou combinés à des moyens de refroidissement tels que des tubes dans lesquels circulent un fluide caloporteur.

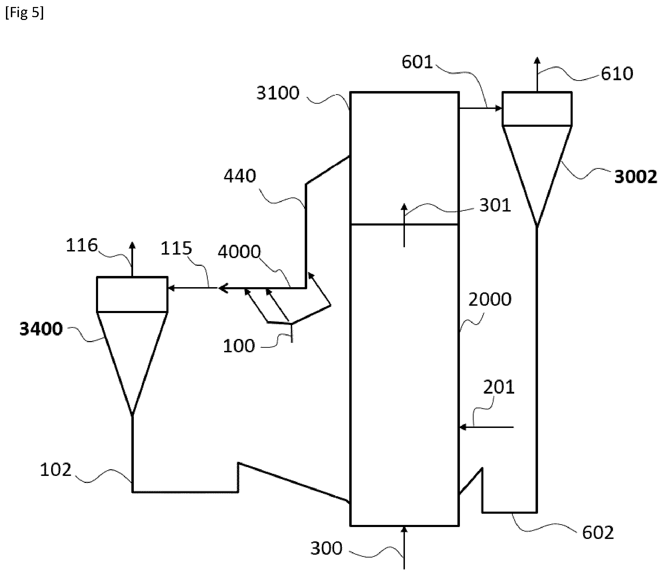

Un mélange gaz/solide 301 comprenant les gaz issus de la combustion, aussi appelés fumées de combustion dans la présente description, et les particules du porteur d'oxygène est évacué au sommet du réacteur réduction 2000. Un système de séparation gaz/solide de type cyclone 3002, comportant un ou plusieurs cyclones en série et/ou en parallèle, est disposé en aval et connecté directement, i.e. sans autre enceinte ou dispositif intermédiaire, au réacteur de réduction 2000, et permet de séparer les gaz de combustion 310, aussi appelés fumées de combustion, des particules solides du porteur d'oxygène dans leur état le plus réduit 400. Dans le cas de la présence d'imbrûlés pouvant survenir si la charge hydrocarbonée est solide, un dispositif de séparation solide/solide permettant de séparer les particules d'imbrûlés des particules de la masse active peut être mis en œuvre en sortie du réacteur de réduction, tel que cela est décrit plus bas pour d'autres modes de réalisation en relation avec la figure 5.

Les particules du porteur d'oxygène 400 ayant séjourné dans le réacteur de réduction 2000, et séparées des gaz de combustion, sont envoyées vers le réacteur d'oxydation cyclonique 3200 pour être ré-oxydées et séparées.

Le réacteur d'oxydation cyclonique 3200 comporte :
- une chambre cylindro-conique comportant une portion supérieure cylindrique surmontant une portion inférieure tronconique inversée (la portion tronconique est dite inversée car la section de cône de plus faible diamètre se trouve dans la partie inférieure de la chambre cylindro-conique, et la section de cône de diamètre le plus important se trouve dans la partie supérieure connectée à la portion supérieure cylindrique, lorsque le réacteur est en fonctionnement),
- une conduite d'arrivée pour un mélange gazeux 120 comprenant des particules du porteur d'oxygène 400 et du gaz oxydant 100, cette conduite d'arrivée comportant un conduit d'injection principal de gaz oxydant 100 et débouchant dans la portion supérieure cylindrique de la chambre du réacteur,
- une conduite de sortie pour un flux gazeux appauvri en oxygène 110 positionnée au sommet de la portion supérieure cylindrique ; et
- une conduite d'évacuation d'un flux de particules de porteur d'oxygène 102 positionnée au fond de la portion inférieure tronconique inversée.

Le porteur d'oxygène réduit 400 est avantageusement mélangé avec un flux de gaz oxydant 100, typiquement de l'air ou de la vapeur d'eau, et de préférence de l'air, dans une conduite d'arrivée du réacteur d'oxydation cyclonique. Le flux de gaz oxydant est de préférence envoyé par un conduit d'injection principal dans la conduite d'arrivée du réacteur cyclonique, connectée à la sortie du cyclone 3002, la ligne de circulation entre le cyclone 3002 et la conduite d'arrivée du réacteur cyclonique comportant de préférence un dispositif d'étanchéité gaz tel qu'un siphon comme représenté dans la figure 2.

L'air qui peut être utilisé en tant que gaz oxydant, est de préférence composé approximativement de 21% de dioxygène et 78% de diazote (aussi appelé classiquement air « frais »). Le complément d'environ 1 % est composé majoritairement d'argon mais également d'autres gaz rares comme le néon, le krypton et le xénon, ainsi que de dioxyde de carbone à hauteur d'environ 0,04 %.

Le mélange gazeux 120 comportant le porteur d'oxygène 400 est ensuite envoyé dans la portion supérieure cylindrique de la chambre du réacteur d'oxydation cyclonique.

Dans la chambre du réacteur d'oxydation cyclonique, le porteur d'oxygène est oxydé au contact du gaz oxydant 100 et le porteur d'oxygène oxydé est séparé du gaz oxydant appauvri en oxygène 110, e.g. air appauvri aussi appelé air « appauvri » ou « déplété », résultant de l'oxydation. Le gaz oxydant appauvri en oxygène 110 est évacué par la conduite de sortie au sommet de la portion supérieure cylindrique de la chambre, et un flux de porteur d'oxygène oxydé 102 est évacué par la conduite d'évacuation au fond de la portion inférieure tronconique inversée de la chambre. Le flux de particules de porteur d'oxygène oxydé 102 est transféré dans le réacteur de réduction 2000. Avantageusement la ligne de circulation du flux 102 comporte un dispositif d'étanchéité, par exemple un siphon.

Par gaz oxydant appauvri (e.g. air appauvri), on entend un gaz oxydant appauvri en oxygène, comparativement à un gaz oxydant initial (e.g. air initial ou air « frais) » avant réaction dans la zone d'oxydation. Le gaz appauvri (e.g. air appauvri) contient de préférence moins de 4 % de dioxygène. La teneur en dioxygène de du gaz appauvri dépend de la quantité de dioxygène contenu initialement dans le gaz oxydant initial (environ 21% dans le cas de l'air frais), et de la sur-stœchiométrie appliquée pour assurer l'état d'oxydation maximal de toutes les particules du porteur d'oxygène.

Typiquement, le gaz oxydant appauvri (e.g. air appauvri) comprend environ 2 % de dioxygène. Par environ, on entend à plus ou moins 0.5 % près. Cela résulte du choix d'appliquer de préférence une sur-stœchiométrie de l'ordre de 10% pour garantir l'état d'oxydation suffisant de l'ensemble des particules. Cette sur-stœchiométrie peut être nécessaire pour pallier les limitations au transfert entre l'oxygène et les particules et peut varier en fonction de la cinétique de réaction avec le porteur d'oxygène, et de l'hydrodynamique dans le réacteur.

La fonction du réacteur d'oxydation cyclonique 3200 d'oxyder le porteur d'oxygène se traduit par l'enrichissement de ce dernier en oxygène par réaction entre la forme réduite du porteur d'oxygène et le dioxygène du gaz oxydant 100.

Dans le réacteur d'oxydation cyclonique 3200, le porteur d'oxygène est restauré à son état oxydé MₓO_{y} au contact du gaz oxydant 100 (e.g. air ou vapeur d'eau, et de préférence de l'air), selon la réaction (2) ci-dessous.

[Math 2] MₓO_{y-2n-m/2} + (n+m/4) O₂ → MₓO_{y}

Où n et m représentent respectivement le nombre d'atomes de carbone et d'hydrogène ayant réagi avec le porteur d'oxygène dans le réacteur de combustion.

Cette réaction est fonction de la température, de la pression partielle d'oxygène mais aussi du temps de contact entre le solide et le gaz oxydant. Ce temps est généralement compris entre 1 seconde et 30 secondes.

Le temps de résidence du porteur d'oxygène dans le réacteur d'oxydation est inférieur ou égal à 30 secondes, de préférence compris entre 1 s et 30 s, plus préférentiellement compris entre 1 s et 20 s, encore plus préférentiellement compris entre 1 s et 10 s.

La température dans le réacteur d'oxydation cyclonique est généralement comprise entre 600°C et 1400°C, préférentiellement entre 700°C et 1000°C.

Le porteur d'oxygène, passant alternativement de sa forme oxydée dans le réacteur d'oxydation cyclonique à sa forme réduite dans le réacteur de réduction et inversement, décrit un cycle d'oxydo-réduction.

Le porteur d'oxygène peut être composé d'oxydes métalliques, tels que par exemple des oxydes de Fe, Ti, Ni, Cu, Mn, Co, V, seuls ou en mélange, pouvant provenir de minerais (par exemple l'ilménite, l'hématite ou la pyrolusite) ou être synthétiques (par exemple des particules d'oxyde de cuivre supportées sur alumine CuO/Al₂O₃ ou des particules d'oxyde de nickel supportées sur alumine NiO/Al₂O₃, de préférence des particules d'oxyde de cuivre supportées sur alumine CuO/Al₂O₃), avec ou sans liant, et présente les propriétés d'oxydo-réduction requises et les caractéristiques nécessaires à la mise en œuvre de la fluidisation.

Sans être exhaustif, le porteur d'oxygène comporte au moins un oxyde métallique qui peut être compris dans la liste constituée par les oxydes de Fe, Cu, Ni, Mn et/ou Co, une pérovskite présentant des propriétés redox (e.g. une pérovskite de formule CaMnO₃ ou une pérovskite combinant du Mn, Ti et Fe), un spinelle d'aluminate métallique présentant des propriétés redox, de préférence un spinelle d'aluminate métallique de formule CuAl₂O₄ ou de formule CuFe₂O₄.

La capacité de stockage en oxygène du porteur d'oxygène est avantageusement comprise, suivant le type de matériau, entre 0,5 % et 15 % poids. Avantageusement, la quantité d'oxygène effectivement transférée par l'oxyde métallique est comprise entre 0,5 % et 3 % poids, ce qui permet de n'utiliser qu'une fraction de la capacité totale de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures sur le parcours du porteur d'oxygène.

Le porteur d'oxygène est sous la forme de particules fluidisables, appartenant aux groupes A, B, C ou D de la classification de Geldart, de préférence aux groupes A, B, ou D, seuls ou en combinaison. De préférence, les particules d porteur d'oxygène appartiennent au groupe B de la classification de Geldart. À titre d'exemple, et de manière non limitative, les particules du groupe B utilisées présentent une granulométrie telle que plus de 90 % des particules ont une taille comprise entre 100 µm et 500 µm, de préférence comprise entre 150 µm et 300 µm.

De préférence, les particules du porteur d'oxygène, qui peuvent être des oxydes métalliques, synthétiques ou minérais naturels, supportés ou non, ont une densité comprise entre 1000 kg/m³ et 5000 kg/m³ et préférentiellement entre 1200 kg/m³ et 4000 kg/m³.

Par exemple, les particules d'oxyde de nickel supportées sur alumine (NiO/NiAl₂O₃) présentent généralement une masse volumique de grain comprise entre 2500 kg/m³ et 3500 kg/m³ en fonction de la porosité du support et de la teneur en oxyde de nickel, typiquement de 3200 kg/m³ environ. L'ilménite, minerai associant le titane et le fer (oxyde de fer et titane : FeTiO₃), présente une masse volumique de 4700 kg/m³.

Le porteur d'oxygène peut subir une phase d'activation de manière à augmenter ses capacités réactives, pouvant consister en une phase de montée en température, de préférence progressive, et de préférence sous atmosphère oxydante (par exemple sous air).

De préférence, le porteur d'oxygène a la propriété de s'oxyder rapidement dans les conditions opérées dans le réacteur d'oxydation cyclonique, notamment les conditions de température opérées. De préférence, un taux d'oxydation du porteur d'oxygène (i.e. ratio entre masse oxydée et masse active) compris entre 55% et 95% est atteint en 30 secondes ou moins dans le réacteur d'oxydation cyclonique, de préférence en 20 secondes ou moins, et plus préférentiellement en 10 secondes ou moins. Des porteurs d'oxygène adaptés pour une telle oxydation rapide, sans être exhaustif, sont par exemple des particules de pérovskite (une pérovskite présentant des propriétés redox, par exemple une pérovskite combinant du Mn, Ti et Fe), des particules d'oxyde de cuivre supportées sur alumine, de minerai de manganèse, d'hématite, d'ilménite, etc. Selon un ou plusieurs modes de réalisation le porteur utilisé comporte des particules de pérovskite, d'oxyde de cuivre supportées sur alumine, ou de minerai de manganèse.

La structure cyclonique du réacteur d'oxydation est de préférence celle d'un cyclone classique de type à retournement de flux avec une entrée tangentielle (« tangential-inlet reverse-flow cyclone » en anglais). Dans ce type de cyclones, le mélange gazeux contenant des particules solides entre en haut du cyclone et se voit imposer un mouvement centrifuge en raison de son entrée tangentielle. Les particules sont propulsées vers la paroi du cyclone par la force centrifuge puis tombent le long du la paroi en raison de la gravité. Au bas du cyclone, dans la section tronconique inversée, le flux de gaz, débarrassé des particules qui sont évacuées en bas de la section tronconique, s'inverse pour former un vortex interne qui sort par un conduit axial en haut du cyclone. Dans le réacteur d'oxydation cyclonique selon l'invention, la conduite de sortie du flux de gaz appauvri en oxygène 110 est de préférence disposée dans l'axe de la chambre cylindro-conique du réacteur, et peut comporter une partie cylindrique interne sur une hauteur h, généralement appelée « vortex finder » en anglais, comme cela est classique dans un cyclone à retournement de flux.

La fonction du réacteur d'oxydation cyclonique 3200 de séparer le porteur d'oxygène oxydé du gaz oxydant appauvri en oxygène, tout en assurant l'oxydation, est assurée par la structure de cyclone du réacteur, et aboutit à la production du flux gazeux appauvri en oxygène 110 sortant au sommet de la portion supérieure cylindrique de la chambre du réacteur, et le flux de particules de porteur d'oxygène 102 évacué au fond de la portion inférieure tronconique inversée de la chambre du réacteur.

Le mélange gaz/solide 120 qui entre dans le réacteur cyclonique produit un mouvement en vertige à cause de la force centrifuge. Ce mouvement produit plusieurs spirales dans la partie supérieure cylindrique de la chambre cylindro-conique (aussi communément appelée « baril » pour un cyclone) avant la séparation entre le gaz qui sort par la conduite de sortie en haut de la chambre et le solide collecté en bas de la chambre. Le nombre de spirales parcourus par le mélange gaz/solide dans le réacteur cyclonique dépend des vitesses d'entrée et la sortie et la concentration du solide dans le gaz. Pour une même géométrie de l'entrée et de la sortie du gaz, l'efficacité de séparation du réacteur cyclonique reste la même alors que le temps de résidence du solide dans le réacteur cyclone peut être adapté au besoin en concevant un réacteur cyclonique de plus grand diamètre et hauteur. Un diamètre plus important du réacteur cyclone permet d'augmenter le périmètre parcouru par la spirale du solide et permet d'obtenir le temps de résidence désiré pour réaliser la réaction d'oxydation.

De préférence, la conduite d'arrivée du réacteur d'oxydation cyclonique peut avoir une section rectangulaire.

La conduite d'arrivée du réacteur d'oxydation cyclonique peut également être munie d'au moins un conduit d'injection secondaire de gaz oxydant 100 (non représenté à la figure 2), de préférence disposé sur une paroi inférieure de la conduite d'arrivée. Ce ou ces conduits d'injection secondaires permettent d'injecter du gaz oxydant de manière à disperser les particules solides du porteur d'oxygène et limiter le risque de dépôt de particules solides dans la conduite d'arrivée. Un tel risque peut aussi être limité par l'emploi d'une conduite d'arrivée dont la paroi inférieure est inclinée par rapport à l'horizontale d'un angle α supérieur à l'angle de repos des particules solides. L'angle α a de préférence une valeur absolue comprise entre α' et α'+45°, de préférence comprise entre α'+10° et α'+20°, α' étant l'angle de repos des particules. L'angle de repos ou de talus α' des particules est traditionnellement défini comme l'angle entre la pente du tas de poudre non tassée et la direction horizontale et peut être déterminé avec différentes méthodes. Par exemple, cet angle peut être mesuré en versant la poudre à travers un entonnoir, ce qui permet de former un petit tas de produit caractérisé par une pente par rapport à la surface horizontale. L'angle de repos peut aussi être mesuré en faisant glisser un solide sur une plaque inclinée, l'angle de repos étant alors mesuré comme étant l'angle auquel le matériau solide commence à glisser, ou en utilisant un cylindre rotatif pour déterminer l'angle qui permet le solide de s'écouler. Ces deux dernières méthodes sont de préférence utilisées pour déterminer l'angle de repos car elles mettent en jeu le mouvement du solide. L'angle α d'inclinaison de la paroi inférieure de la conduite d'arrivée peut avoir une valeur absolue comprise entre 5° et 80°, de préférence entre 15° et 60°, plus préférablement entre 15° et 45°, et encore plus préférablement entre 20° et 45°.

L'inclinaison vers le bas de la paroi inférieure de la conduite d'arrivée favorise l'écoulement et la ré-accélération des particules solides en direction de la chambre du réacteur cyclonique, en réduisant la vitesse de saltation des particules, et en conséquence l'accumulation des particules, et le ou les conduits d'injection secondaires permettent d'injecter du gaz oxydant, de manière auxiliaire à l'injection principale, de manière à disperser les particules solides. En particulier, cela permet de réorienter les particules solides qui tombent sur la paroi inférieure vers le flux de gaz principal dans la conduite d'arrivée, et de détruire le cas échéant les agglomérats de particules. Par exemple, le débit de gaz oxydant envoyé de manière auxiliaire par les conduits d'injection secondaires est compris entre 0,1% et 30% en volume du débit de gaz oxydant injecté par le conduit d'injection principal et utilisé pour l'oxydation du porteur d'oxygène dans le réacteur cyclonique, voire entre 1% et 10% en volume. Par un dépôt de particules solides réduit dans la conduite d'arrivée, on évite d'obstruer l'entrée du réacteur cyclonique et on évite de perturber le fonctionnement cyclonique du réacteur et donc la bonne séparation gaz/solide. La dispersion des particules solides dans le flux gazeux principal permet l'entrainement d'un maximum de particules dans la chambre du réacteur d'oxydation cyclonique, et par là même une meilleure séparation gaz/solide qu'en cas de stagnation et d'agglomération de ces mêmes particules dans la conduite.

Le nombre de conduits d'injection secondaires dépend du débit total de gaz oxydant complémentaire injecté, et la paroi inférieure de la conduite peut comporter par exemple entre 1 et 10, de préférence entre 2 et 5, conduits d'injections secondaires par mètre carré.

Le ou les conduits d'injection secondaires sont de préférence configurés de manière à former un jet ayant un angle compris entre 0° et 90°, de préférence supérieur à 0° et inférieur à 90°, et plus préférentiellement compris entre 0° (et de préférence supérieur à 0°) et 45°, par rapport à l'axe horizontal dans un plan vertical. Le jet formé est ainsi de préférence dirigé dans l'axe de l'écoulement du mélange gaz/solide dans la conduite, afin de ne pas trop perturber le flux se dirigeant vers la chambre du réacteur d'oxydation cyclonique.

Avantageusement, le ou les conduits d'injection secondaires peuvent être configurés de manière que la vitesse du gaz à la sortie dudit conduit soit comprise entre 5 m/s et 100 m/s, de préférence comprise entre 20 m/s et 40 m/s, pour éviter que des particules solides ne rentrent dans le conduit d'injection secondaire, pour obtenir une bonne dispersion des particules solides et casser les éventuels agglomérats sans créer de l'attrition.

De préférence, la conduite d'arrivée comporte peut avoir une section à l'entrée de la chambre du réacteur telle que la vitesse superficielle du gaz du mélange gaz/solide gazeux sortant de ladite conduite d'arrivée et entrant dans la chambre est comprise entre 5 m/s et 35m/s, et plus préférentiellement comprise entre 15 m/s et 25 m/s, pour avoir de bonnes performances de séparation.

Avantageusement, les aires des sections de la conduite d'arrivée à ses deux extrémités peuvent être égales, et par conséquent les vitesses superficielles de gaz qui y sont rattachés peuvent aussi être égales. De cette manière, il est possible de limiter l'érosion du réacteur cyclonique et l'attrition des particules liée à un impact fort avec les parois du cyclone, qui pourraient se produire si la vitesse du gaz augmentait. Ceci est par exemple possible si la conduite d'arrivée à paroi inférieure inclinée comporte également une paroi latérale verticale inclinée d'un angle β défini dans le plan horizontal, de sorte que les sections aux extrémités aient une même aire, voire que l'aire de la section tout au long de la conduite d'arrivée soit constante. L'angle β peut avoir une valeur absolue comprise entre 5° et 70°, de préférence entre 10° et 50°.

Selon l'invention, le réacteur d'oxydation cyclonique est opéré dans les conditions de température du procédé CLC comme déjà détaillé plus haut. Il est ainsi de préférence formé de matériaux adaptés aux hautes températures rencontrées dans le CLC, typiquement comprises entre 700°C et 1000°C, voire entre 600°C et 1400°C, par exemple, et sans être limitatif, des aciers haute température, comme ceux de type Hastelloy^{®}, Incoloy^{®}, Inconel^{®} ou Manaurite^{®}, ou des aciers conventionnels, par exemple de type acier inoxydable ou acier au carbone combinés à des matériaux réfractaires ou combinés à des moyens de refroidissement tels que des tubes dans lesquels circulent un fluide caloporteur.

Le réacteur d'oxydation cyclonique est bien adapté à la séparation gaz/solide de mélanges gaz/solide comportant des particules solides dont le diamètre moyen des particules est compris entre 20 µm et 1000 µm. En particulier, le réacteur d'oxydation cyclonique est bien adapté à la séparation gaz/solide de mélanges gaz/solide comportant des particules solides de la taille décrit plus pour le porteur d'oxygène, ayant une granulométrie telle que plus de 90 % des particules ont une taille comprise entre 100 µm et 500 µm, de préférence comprise entre 150 µm et 300 µm.

Le réacteur d'oxydation cyclonique est bien adapté à la séparation gaz/solide de mélanges gaz/solide comportant une charge en particules solides de préférence comprise entre 0,1 et 50 pds/pds (poids des particules solides par rapport au poids du gaz).

Selon une ou plusieurs variantes non représentées, l'installation CLC peut comporter plusieurs réacteurs d'oxydation cycloniques configurés pour fonctionner en parallèle, l'oxydation du porteur d'oxygène étant dans ce cas effectuée en parallèle dans les différents réacteurs d'oxydation cycloniques. L'installation CLC comprend alors des moyens de distribution du porteur d'oxygène et d'alimentation en gaz oxydant pour les différents réacteurs d'oxydation cycloniques, ainsi que des moyens de collecte du porteur d'oxygène oxydé issu des différents réacteurs d'oxydation pour le renvoi vers le réacteur de réduction 2000. Un tel schéma permet de répondre à une contrainte sur une dimension maximale d'équipement à respecter ou une contrainte de place pour l'implantation sur site de l'installation CLC.

L'installation CLC selon l'invention, et en particulier le réacteur d'oxydation cyclonique permet de réduire le temps de séjour du porteur d'oxygène dans la boucle « air » (sections où le porteur d'oxygène est au contact de l'air) de moitié par rapport à un schéma classique d'un réacteur air associé à un cyclone, sans qu'il y ait de baisse de performances.

Par ailleurs, l'installation CLC selon l'invention est plus compacte comparativement au schéma classique du CLC tel que représenté à la figure 1, et les couts d'investissements (CAPEX) peuvent être moins élevés du fait de l'économie d'équipements.

Un avantage lié à l'invention réside également dans la transformation possible d'unité de combustion industrielles existantes, comportant typiquement une chaudière qui peut être transformée en réacteur fuel et équipée d'un réacteur d'oxydation cyclonique tel que décrit pour former une installation CLC.

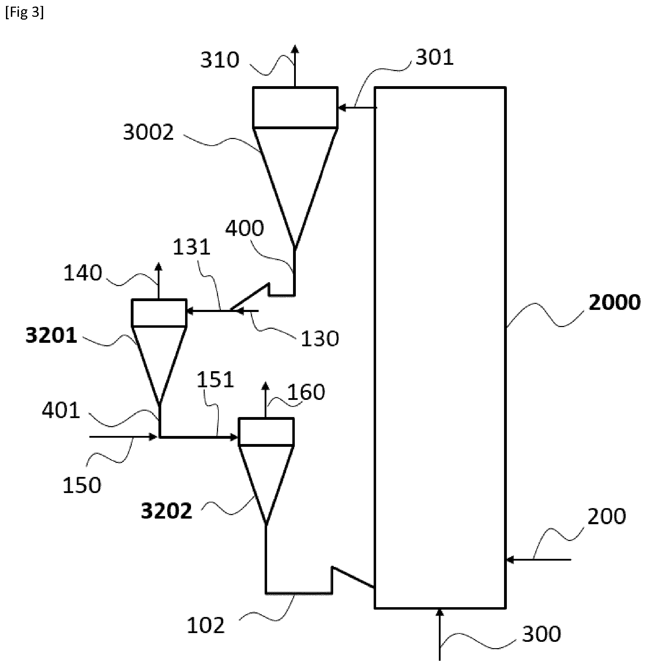

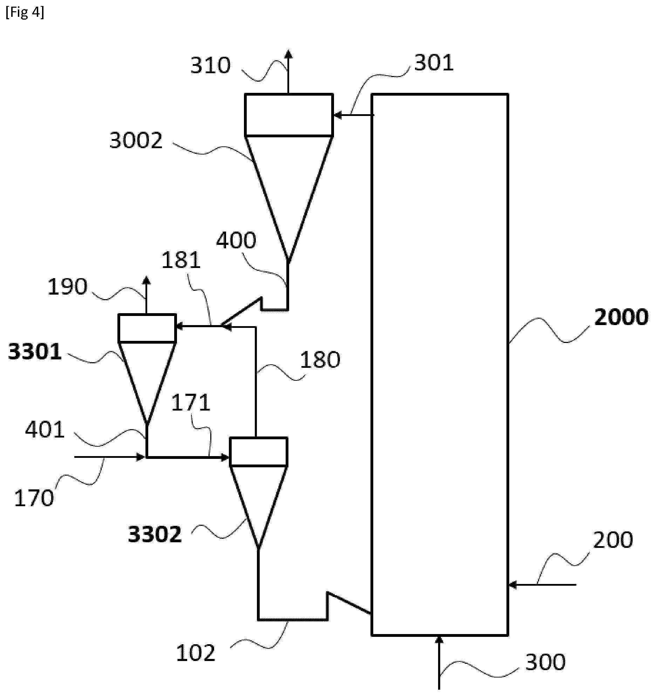

Selon une ou plusieurs variantes non représentées, l'installation CLC comporte plusieurs réacteurs d'oxydation cycloniques configurés pour fonctionner en série. Des exemples sont illustrés aux figures 3 et 4 et décrits ci-dessous.

La figure 3 représente une installation CLC selon un ou plusieurs modes de réalisation de la présente invention, ainsi que son fonctionnement, comprenant deux réacteurs d'oxydation cycloniques successifs. L'installation CLC et son fonctionnement sont en tout point identiques à ce qui a été décrit en relation avec la figure 2, à l'exception de la partie oxydation du porteur d'oxygène qui est détaillée ci-dessous. Néanmoins, le principe de l'oxydation du porteur d'oxygène, la nature des réactifs, les conditions de température, la structure du réacteur d'oxydation cyclonique, les matériaux utilisés pour les réacteurs, sont identiques à ceux décrits en relation avec la figure 2, et ne sont pas répétés ici.

Selon ce ou ces modes de réalisation, l'installation et le procédé CLC comprennent une oxydation étagée : la réaction d'oxydation du porteur d'oxygène est décomposée en n étapes successives, par exemple en deux étapes mettant chacune en œuvre un réacteur d'oxydation cyclonique dédié, les deux réacteurs d'oxydation cyclonique fonctionnant en série, comme représenté à la figure 3.

A chacune de ces étapes d'oxydation, le porteur d'oxygène est mélangé avec un gaz oxydant et entraîné par un débit de gaz oxydant équivalent à 1/n du débit de gaz oxydant nécessaire à l'oxydation complète du porteur d'oxygène.

Le flux de porteur d'oxygène réduit 400 est introduit dans la conduite d'arrivée d'un premier réacteur d'oxydation cyclonique 3201 où il est mélangé avec un premier flux de gaz oxydant 130, dont il résulte un premier mélange gaz/solide 131 qui est introduit dans le premier réacteur d'oxydation cyclonique 3201, fonctionnement de manière identique à ce qui a été décrit en relation avec la figure 1, si ce n'est que le porteur d'oxygène séparé évacué dudit premier réacteur est partiellement oxydé et que son oxydation est complétée dans un deuxième réacteur d'oxydation cyclonique 3202. De l'opération du premier réacteur d'oxydation cyclonique 3201, il résulte un flux de gaz oxydant appauvri 140 évacué par une conduite de sortie au sommet de la chambre du premier réacteur 3201, et un flux de porteur d'oxygène partiellement oxydé 401 évacué par la conduite d'évacuation du premier réacteur 3201. Le flux de porteur d'oxygène partiellement oxydé 401 est envoyé dans la conduite d'arrivée du deuxième réacteur cyclonique 3202 où il est mélangé avec un deuxième flux de gaz oxydant 150 pour former un deuxième mélange gaz-solide 151 qui est introduit dans le deuxième réacteur d'oxydation cyclonique 3202. L'oxydation du porteur est alors complétée au sein de la chambre de ce second réacteur d'oxydation cyclonique 3202, d'où il résulte un deuxième flux de gaz appauvri 160 évacué par une conduite de sortie au sommet de la chambre du deuxième réacteur 3202, et un flux de porteur d'oxygène oxydé 102 évacué par la conduite d'évacuation du deuxième réacteur 3202, à destination du réacteur de réduction 2000.

Le ou les modes de réalisation représentés à la figure 3 ont pour avantage de permettre une oxydation du porteur d'oxygène tout en répondant à une contrainte sur une dimension maximale d'équipement à respecter ou une contrainte de place pour l'implantation sur site de l'installation CLC.

La figure 4 représente une installation CLC selon un ou plusieurs modes de réalisation de la présente invention, ainsi que son fonctionnement, comprenant deux réacteurs d'oxydation cycloniques successifs, dont le premier est alimenté avec un gaz oxydant appauvri en oxygène issu du second réacteur d'oxydation. L'installation CLC et son fonctionnement sont en tout point identiques à ce qui a été décrit en relation avec la figure 2, à l'exception de la partie oxydation du porteur d'oxygène qui est détaillée ci-dessous. Néanmoins, le principe de l'oxydation du porteur d'oxygène, la nature des réactifs, les conditions de température, la structure du réacteur d'oxydation cyclonique, les matériaux utilisés pour les réacteurs, sont identiques à ceux décrits en relation avec la figure 2, et ne sont pas répétés ici.

Selon ce ou ces modes de réalisation, l'installation et le procédé CLC comprennent une oxydation étagée comme celle illustrée à la figure 3, comprenant n étapes d'oxydation, mise à part que la mise en contact du porteur d'oxygène dans son état le plus réduit se fait avec un gaz oxydant appauvri en oxygène, provenant d'un étage d'oxydation aval. L'oxydation est ici aussi réalisée en n étapes successives, par exemple en deux étapes mettant chacune en œuvre un réacteur d'oxydation cyclonique dédié, les deux réacteurs d'oxydation cyclonique fonctionnant en série, comme représenté à la figure 4, mais contrairement à l'oxydation illustrée à la figure 3, le flux gazeux appauvri en oxygène du deuxième réacteur d'oxydation cyclonique sert de gaz oxydant envoyé dans le conduit d'injection principal de la conduite d'arrivée du premier réacteur cyclonique. Dans le cas où n est supérieur à 2, chaque étage est alimenté par l'air appauvri provenant du réacteur d'oxydation cyclonique aval. Seul le dernier réacteur d'oxydation cyclonique est alimenté par de l'air frais : ce sont les derniers pourcents de taux d'oxydation qui sont les plus difficiles à obtenir, et de l'air frais, riche en dioxygène, est donc avantageusement utilisé dans le réacteur le pus aval. À chacune de ces étapes d'oxydation, le porteur d'oxygène est mélangé avec un gaz oxydant et entraîné par un débit de gaz oxydant équivalent à 1/n du débit de gaz oxydant nécessaire à l'oxydation complète du porteur d'oxygène.

Selon ce ou ces modes de réalisation, le débit de gaz oxydant nécessaire à l'oxydation complète correspond de préférence au débit d'air frais 150 dans le dernier réacteur d'oxydation cyclonique. Chaque réacteur d'oxydation cyclonique (de l'avant dernier au premier) reçoit de préférence un débit de plus en plus réduit de gaz oxydant, car progressivement appauvri en O₂.

Le flux de porteur d'oxygène réduit 400 est introduit dans la conduite d'arrivée d'un premier réacteur d'oxydation cyclonique 3301 où il est mélangé avec le flux gazeux 180 produit dans un deuxième réacteur d'oxydation cyclonique 3302, dont il résulte un premier mélange gaz/solide 181 qui est introduit dans le premier réacteur d'oxydation cyclonique 3301, fonctionnement de manière identique à ce qui a été décrit en relation avec la figure 1, si ce n'est que le porteur d'oxygène séparé évacué dudit premier réacteur est partiellement oxydé et que son oxydation est complétée dans le deuxième réacteur d'oxydation cyclonique 3302. De l'opération du premier réacteur d'oxydation cyclonique 3301, il résulte un flux de gaz oxydant appauvri 190 évacué par une conduite de sortie au sommet de la chambre du premier réacteur 3301, et un flux de porteur d'oxygène partiellement oxydé 401 évacué par la conduite d'évacuation du premier réacteur 3301. Le flux de porteur d'oxygène partiellement oxydé 401 est envoyé dans la conduite d'arrivée du deuxième réacteur cyclonique 3302 où il est mélangé avec un flux de gaz oxydant frais 170 (e.g. air frais) pour former un deuxième mélange gaz-solide 171 qui est introduit dans le deuxième réacteur d'oxydation cyclonique 3302. L'oxydation du porteur est alors complétée au sein de la chambre de ce second réacteur d'oxydation cyclonique 3302, d'où il résulte deux flux :
- le flux gazeux 180 évacué par une conduite de sortie au sommet de la chambre du deuxième réacteur 3202, ladite conduite de sortie étant connectée à la conduite d'arrivée du premier réacteur d'oxydation cyclonique 3301 pour former le conduit d'injection principal de gaz oxydant de la première conduite d'arrivée, et
- le flux de porteur d'oxygène oxydé 102 évacué par la conduite d'évacuation du deuxième réacteur 3302, à destination du réacteur de réduction 2000.

Le ou les modes de réalisation représentés à la figure 4 ont pour avantage de permettre une oxydation du porteur d'oxygène tout en répondant à une contrainte sur une dimension maximale d'équipement à respecter ou une contrainte de place pour l'implantation sur site de l'installation CLC. Un autre avantage de ce schéma réside dans la diminution possible du temps de contact nécessaire pour l'oxydation du porteur d'oxygène : on met en effet en contact le porteur d'oxygène dans son état le plus réduit, et donc le plus « actif » pour être oxydé, avec le gaz oxydant le plus pauvre en oxygène. De ce fait, le temps de séjour nécessaire pour atteindre un état d'oxydation donné est plus court que pour un arrangement à co-courant comme dans l'état de l'art ou dans la figure 3.

La figure 5 représente une installation CLC selon un ou plusieurs modes de réalisation de la présente invention, ainsi que son fonctionnement, bien adaptés à la combustion d'une charge hydrocarbonée solide, comprenant un réacteur d'oxydation cyclonique et un dispositif de séparation solide/solide en sortie du réacteur de réduction.

Dans le cas de la combustion de charges solides, l'installation CLC peut en effet comprendre :
- un séparateur solide/solide 3100, comme déjà mentionné plus haut, disposé en aval et connecté directement, i.e. sans autre enceinte ou dispositif intermédiaire, au réacteur de réduction 2000, configuré pour opérer en lit fluidisé, pour recevoir un mélange gaz/solide 301 issu dudit réacteur de réduction 2000, et pour effectuer la séparation entre des particules du porteur d'oxygène réduit 440 et des particules d'imbrûlés contenues dans le mélange gaz/solide 310 ; et
- au moins un cyclone 3002 disposé en aval du dispositif de séparation solide/solide 3100 et configuré pour recevoir un flux gazeux 601 comportant les particules d'imbrûlés et pour effectuer la séparation entre les particules d'imbrûlés et les fumées de combustion 610, le cyclone 3002 comportant de préférence une conduite de sortie pour les particules d'imbrûlés 602 connectée au réacteur de réduction 2000.

Le flux de porteur d'oxygène 102 est acheminé dans le réacteur de réduction 2000 fluidisé par un gaz de fluidisation 300 où il va réagir avec la charge hydrocarbonée solide 201, dont la conversion en une passe peut être incomplète et nécessiter plusieurs passes dans le réacteur de réduction, avec une recycle de la fraction non convertie de la charge. Le séparateur solide/solide 3100 permet de séparer le porteur d'oxygène réduit 440 d'un flux gazeux 601 comportant des gaz de combustion, du gaz de fluidisation, une fraction solide non convertie de la charge appelée particules d'imbrûlés, et une fraction minoritaire de porteur d'oxygène. Le flux gazeux 601 comportant des particules solides est séparé dans le cyclone 3200 qui évacue un flux 610 comportant les fumées de combustion (et comportant aussi une partie du gaz de fluidisation) et d'autre part un flux 602 comportant la fraction non convertie de la charge (particules d'imbrûlés) et une fraction minoritaire du porteur d'oxygène, qui sont de préférence réacheminés au réacteur de réduction 2000.

Le flux de porteur d'oxygène réduit 440 est de préférence extrait du séparateur solide/solide 3100 au moyen d'une vanne en L 4000, qui est un dispositif permettant de contrôler le flux de porteur d'oxygène qui la traverse en fonction de la fraction de gaz oxydant 100, e.g. de l'air, qui est introduite dans la partie verticale de la vanne en L. Le reste du gaz oxydant, e.g. de l'air, peut être introduit dans la partie horizontale de la vanne en L de manière à former et transporter le mélange gaz solide 115 vers le réacteur d'oxydation cyclonique 3400 où est réalisée l'oxydation du porteur d'oxygène et la séparation gaz/solide telles que décrites en relation avec la figure 2, et dont il résulte deux flux, un flux de gaz oxydant appauvri 116, e.g. air appauvri, et un flux de porteur d'oxygène oxydé 102 à destination du réacteur de réduction 2000.

D'autres cyclones similaires au cyclone 3002 peuvent être positionnés en aval du cyclone 3002 pour une séparation gaz/solide plus poussée.

Le séparateur solide/solide 3100 est utilisé pour effectuer une séparation entre des particules d'imbrûlés et les particules du porteur d'oxygène sur la base des propriétés physiques de taille et de masse volumiques différentes des particules. En effet, les particules du porteur d'oxygène, décrit plus haut, ont en général une taille et une masse volumique bien plus importantes que celles des particules d'imbrûlés, et également que celle de cendres volantes issues du réacteur de réduction. Le séparateur solide/solide 3100 peut ainsi être utilisé pour effectuer une séparation entre d'une part des particules d'imbrûlés et d'autre part des particules du porteur d'oxygène ayant une masse volumique supérieure ou égale à 1000 kg/m³, de préférence supérieure ou égale à 1200 kg/m³, plus préférentiellement supérieure ou égale à 2500 kg/m³. Typiquement, plus de 90 % des particules du porteur d'oxygène ont une taille comprise entre 100 µm et 500 µm, de préférence comprise entre 150 µm et 300 µm. En sortie du réacteur de réduction, on estime que la taille des particules d'imbrûlés est inférieure à 100 µm et que la majorité desdites particules d'imbrûlés a une taille comprise entre 20 µm et 50 µm. La masse volumique de ces particules d'imbrûlés est en général comprise entre 1000 et 1500 kg/m³.

D'autres particules comme les cendres volantes, à distinguer des particules d'imbrûlés, et résultant de la combustion de la charge solide, peuvent également circuler avec le reste des particules et sont caractérisées par une taille de particules et une masse volumique plus faibles que les particules de porteur d'oxygène (i.e. inférieure à 100 µm) et souvent plus faibles également que les particules d'imbrûlés. Les cendres sont des éléments incombustibles résultant de la combustion totale des particules de combustible solide et pour lesquelles le temps de séjour dans le réacteur de combustion a été suffisant. Les cendres sont essentiellement de nature minérale. Elles comportent typiquement les composés suivants : SiO₂, Al₂O₃, Fe₂O₃, CaO, MgO, TiO₂, K₂O, Na₂O, SO₃, P₂O₅. Si des cendres sont présentes dans le procédé et en particulier dans le mélange gazeux issu du réacteur de réduction, elles peuvent être séparées et entraînées avec les particules d'imbrûlés dans le séparateur solide/solide 3100.

Un tel séparateur solide/solide est connu et par exemple décrit dans la demande internationale WO2011151535. Il comporte de préférence une enceinte avec une conduite d'admission du mélange gaz/solide 301 débouchant dans une phase diluée en partie supérieure de l'enceinte, une conduite d'évacuation située en partie inférieure de l'enceinte et une conduite de sortie située en partie supérieure de l'enceinte. Les paramètres d'admission et d'évacuation/sortie sont choisis pour créer dans l'enceinte une phase dense en partie inférieure et la phase diluée en partie supérieure (taux de solide généralement inférieur à 5%, voire à 1%). Dans le séparateur solide/solide, la vitesse superficielle de l'écoulement gazeux est avantageusement supérieure à la vitesse terminale de chute des particules d'imbrûlés pour permettre leur entraînement avec le gaz, permettant ainsi de procéder à une séparation "rapide" entre les particules lourdes (porteur d'oxygène) et les particules légères (particules d'imbrûlés). Par séparation rapide, on entend une séparation s'opérant en moins de 1 minute et préférentiellement en moins de 20 secondes, cette durée correspondant au temps de séjour des particules légères dans la phase diluée du séparateur.

Alors que de nombreuses caractéristiques ont été décrites dans le différents modes de réalisation présentés, il sera évident pour l'homme du métier que ces caractéristiques peuvent être combinées dans toute combinaison possible. À titre d'exemple, le ou les modes de réalisation décrits en relation avec la figure 5 peuvent comprendre plusieurs réacteurs d'oxydation cycloniques tels que décrits en relation avec les figures 3 et 4.

### Exemple

L'exemple qui suit vise à illustrer certaines performances d'un exemple de réacteur d'oxydation cyclonique de l'installation CLC selon l'invention, en particulier l'oxydation et la séparation qui peuvent être réalisées dans le réacteur d'oxydation cyclonique.

Le réacteur d'oxydation cyclonique exemplifié est tel que décrit en relation avec la figure 2, et comprend les principales caractéristiques données dans la table 1 ci-dessous.

**[Table 1]**

| | | |
|---|---|---|
| Diamètre réacteur cyclonique (baril) | mètres | 2,4 |
| Hauteur entrée (section rectangulaire de la conduite d'arrivée) | mètres | 1,4 |
| Largeur entrée | mètres | 0,6 |
| Hauteur réacteur cyclonique (chambre cylindro-conique) | mètres | 12 |
| Vₒᵤₜ gaz (m/s) | m/s | 35,0 |
| Nombre de spirales | - | 5,2 |
| Débit solide | kg/s | 65 |
| Température du solide à l'entrée | °C | 830 |
| Débit d'air à 21%mol O₂ | kg/s | 5 |
| Température de l'air à l'entrée | °C | 40 |
| Temps de résidence solide | s | 8,7 |

Un tel réacteur d'oxydation cyclonique permet par exemple d'oxyder les porteurs d'oxygène de type ilménite, minerai de manganèse, minerai de fer, pérovskite, oxyde de cuivre sur alumine entrant dans le réacteur à un taux d'oxydation de 55% jusqu'à un taux d'oxydation supérieur ou égal à 90%, tel qu'indiqué dans la table 2 ci-dessous.

**[Table 2]**

| | Taux d'oxydation en sortie de réacteur |
|---|---|
| Ilménite | 90% |
| Minerai de manganèse | 91% |
| Pérovskite de formule CaMn_{0.375}Ti_{0.5}Fe_{0.125}O₃ | 100% |
| Minerai de fer de Tierga (hématite) | 95% |
| CuO à 10%pds sur Al₂O₃ | 100% |

Un tel réacteur d'oxydation cyclonique permet aussi la séparation des particules solides du porteur d'oxygène et de l'air appauvri.

Pour des particules de 250 microns (granulométrie entre 160 et 475 microns) en diamètre moyen et une densité de 2500 kg/m³, on obtient une séparation gaz/solide de 100%, avec un débit d'air de 5 kg/s et une vitesse d'entrée de 20 m/s.

## Revendications

1. Installation de combustion en boucle chimique d'une charge hydrocarbonée mettant en œuvre un solide porteur d'oxygène sous forme de particules, comportant au moins :
- un réacteur de réduction (2000) configuré pour opérer en lit fluidisé et effectuer la combustion de ladite charge hydrocarbonée (200, 201) au contact dudit porteur d'oxygène (102) ;
- au moins un réacteur d'oxydation cyclonique (3200, 3201, 3202, 3301, 3302, 3400) configuré pour oxyder ledit porteur d'oxygène réduit (400, 440) provenant dudit réacteur de réduction par mise en contact avec un gaz oxydant (100, 130, 150, 180) et pour séparer ledit porteur d'oxygène oxydé dudit gaz oxydant appauvri en oxygène (110, 140, 160, 180, 190, 116);
- des lignes de circulation dudit porteur d'oxygène entre ledit réacteur de réduction (2000) et ledit au moins un réacteur d'oxydation cyclonique (3200, 3201, 3202, 3301, 3302, 3400).

2. Installation selon la revendication 1, dans laquelle ledit au moins un réacteur d'oxydation cyclonique comporte :
- une chambre cylindro-conique comportant une portion supérieure cylindrique surmontant une portion inférieure tronconique inversée,
- une conduite d'arrivée d'un mélange gazeux comprenant des particules du porteur d'oxygène et du gaz oxydant, ladite conduite d'arrivée étant munie d'un conduit d'injection principal de gaz oxydant (100, 130, 150, 180) et ladite conduite d'arrivée débouchant dans ladite portion supérieure cylindrique ;
- une conduite de sortie pour un flux gazeux appauvri en oxygène positionnée au sommet de la portion supérieure cylindrique ;
- une conduite d'évacuation d'un flux de particules de porteur d'oxygène positionnée au fond de la portion inférieure tronconique inversée.

3. Installation selon l'une quelconque des revendications précédentes, comportant plusieurs réacteurs d'oxydation cycloniques configurés pour opérer en série et/ou en parallèle.

4. Installation selon la revendication 3, comportant deux réacteurs d'oxydation cycloniques configurés pour opérer en série (3201, 3202, 3301, 3302).

5. Installation selon la revendication 3, comportant au moins deux réacteurs d'oxydation cycloniques configurés pour opérer en série, et dans laquelle la conduite de sortie d'un deuxième réacteur d'oxydation cyclonique (3302) positionné en aval d'un premier réacteur d'oxydation cyclonique (3301) est connectée à la conduite d'arrivée dudit premier réacteur d'oxydation cyclonique (3301) pour former le conduit d'injection principal de gaz oxydant (180) alimentant ledit premier réacteur d'oxydation cyclonique (3301).

6. Installation selon l'une quelconque des revendications précédentes, dans laquelle la conduite d'arrivée dudit au moins un réacteur d'oxydation cyclonique est munie d'au moins un conduit d'injection secondaire de gaz oxydant, de préférence disposé sur une paroi inférieure de ladite conduite d'arrivée.

7. Installation selon l'une quelconque des revendications précédentes, comportant un cyclone (3002) disposé en aval et directement connecté audit réacteur de réduction (2000), configuré pour recevoir un mélange gaz/solide (301) provenant dudit réacteur de réduction (2000) et effectuer la séparation entre le porteur d'oxygène réduit (400) et des fumées de combustion (310), ledit cyclone (3002) comportant une conduite de sortie pour le porteur d'oxygène réduit (400) connectée audit moins un réacteur d'oxydation cyclonique (3200, 3201, 3301).

8. Installation selon l'une quelconque des revendications 1 à 6, comportant :
- un dispositif de séparation solide/solide (3100) disposé en aval et directement connecté audit réacteur de réduction (2000), ledit dispositif de séparation solide/solide (3100) étant configuré pour opérer en lit fluidisé, pour recevoir un mélange gaz/solide (301) issu dudit réacteur de réduction (2000), et pour effectuer la séparation entre les particules du porteur d'oxygène réduit (440) et des particules d'imbrûlés contenues dans ledit mélange gaz/solide, et
- au moins un cyclone (3002) disposé en aval dudit dispositif de séparation solide/solide (3100) et configuré pour recevoir un flux gazeux (601) comportant lesdites particules d'imbrûlés et pour effectuer la séparation entre lesdites particules d'imbrûlés et des fumées de combustion (610), ledit cyclone (3002) comportant de préférence une conduite de sortie pour lesdites particules d'imbrûlés connectée audit réacteur de réduction (2000).

9. Procédé de combustion en boucle chimique d'une charge hydrocarbonée mettant en œuvre un solide porteur d'oxygène sous forme de particules, dans lequel :
- on effectue une combustion de la charge hydrocarbonée par mise en contact du porteur d'oxygène au sein d'un réacteur de réduction (2000) opéré en lit fluidisé ;
- on effectue une oxydation du porteur d'oxygène ayant séjourné dans le réacteur de réduction (2000) par mise en contact avec un gaz oxydant (100, 130, 150, 180), de préférence de l'air, au sein d'au moins un réacteur d'oxydation cyclonique (3200, 3201, 3202, 3301, 3302, 3400), et on effectue la séparation entre ledit porteur d'oxygène oxydé et le gaz oxydant appauvri en oxygène au sein dudit réacteur d'oxydation cyclonique avant de renvoyer ledit porteur d'oxygène oxydé vers le réacteur de réduction (2000).

10. Procédé selon la revendication 9, dans lequel :
- on mélange un gaz oxydant (100) et le porteur d'oxygène (400, 440) issu du réacteur de réduction (2000) dans une conduite d'arrivée dudit au moins un réacteur d'oxydation cyclonique,
- on envoie ledit mélange gazeux (120, 131, 181, 115) comportant le porteur d'oxygène dans une portion supérieure cylindrique d'une chambre cylindro-conique dudit réacteur d'oxydation cyclonique, ladite chambre cylindro-conique comportant la portion supérieure cylindrique surmontant une portion inférieure tronconique inversée ;
- on effectue l'oxydation dudit porteur d'oxygène au contact du gaz oxydant et la séparation entre le porteur d'oxygène oxydé et le gaz oxydant appauvri en oxygène au sein de ladite chambre cylindro-conique ;
- on évacue ledit gaz oxydant appauvri en oxygène (110, 140, 190, 116) par une conduite de sortie positionnée au sommet de la portion supérieure cylindrique ;
- et on évacue un flux de porteur d'oxygène oxydé (102, 401) par une conduite d'évacuation positionnée au fond de la portion inférieure tronconique inversée.

11. Procédé selon la revendication 10, dans lequel on effectue l'oxydation du porteur d'oxygène (400, 440) issu du réacteur de réduction (2000) dans deux réacteurs d'oxydation cycloniques opérés en série (3201, 3202, 3301, 3302) et/ou en parallèle.

12. Procédé selon la revendication 11, dans lequel on utilise le gaz oxydant appauvri en oxygène évacué par la conduite de sortie d'un deuxième réacteur d'oxydation cyclonique (3302) positionné en aval d'un premier réacteur d'oxydation cyclonique (3301) pour former le mélange gazeux dans la conduite d'arrivée dudit premier réacteur d'oxydation cyclonique (3301) et oxyder le porteur d'oxygène (400, 440) issu du réacteur de réduction (2000) au sein dudit premier réacteur d'oxydation cyclonique (3301).

13. Procédé selon l'une quelconque des revendications 9 à 12, dans lequel on envoie un mélange gaz/solide (301, 601) provenant du réacteur de réduction (2000) dans un cyclone (3002) disposé en aval et directement connecté audit réacteur de réduction (2000) pour effectuer une séparation entre le porteur d'oxygène réduit (400) et des fumées de combustion (310) contenues dans ledit mélange gaz/solide, et on envoie le porteur d'oxygène réduit (400) vers ledit au moins un réacteur d'oxydation cyclonique (3200, 3201, 3301).

14. Procédé selon l'une quelconque des revendications 9 à 12, dans lequel la charge hydrocarbonée est une charge solide sous forme de particules (201), choisie de préférence dans la liste constituée par le charbon, le coke, le petcoke, la biomasse, les sables bitumineux et les déchets ménagers, et dans lequel :
- on envoie un mélange gaz/solide (301) provenant du réacteur de réduction (2000) dans un dispositif de séparation solide/solide (3100) directement connecté audit réacteur de réduction (2000) et opéré en lit fluidisé pour effectuer la séparation entre le porteur d'oxygène réduit (440) et des particules d'imbrûlés contenues dans ledit mélange gaz/solide ;
- on envoie dans au moins un cyclone (3002) un flux gazeux (601) issu du séparateur solide/solide et comportant lesdites particules d'imbrûlés pour effectuer la séparation entre lesdites particules d'imbrûlés (602) et des fumées de combustion (610) ;
- on envoie le porteur d'oxygène réduit (440) vers ledit au moins un réacteur d'oxydation cyclonique (3400), de préférence au moyen d'une vanne en L (4000) ;
- optionnellement on envoie lesdites particules d'imbrûlés (602) vers ledit réacteur de réduction (2000).

15. Procédé selon l'une quelconque des revendications 9 à 14, dans lequel le temps de résidence du porteur d'oxygène dans ledit au moins un réacteur d'oxydation est inférieur ou égal à 30 secondes.

## Patentansprüche

1. Anlage zur Chemical-Looping-Verbrennung eines kohlenwasserstoffhaltigen Einsatzmaterials, die einen partikelförmigen Sauerstoffträger-Feststoff einsetzt, umfassend mindestens:
- einen Reduktionsreaktor (2000), der dazu ausgestaltet ist, in Wirbelschicht zu arbeiten und die Verbrennung des kohlenwasserstoffhaltigen Einsatzmaterials (200, 201) im Kontakt mit dem Sauerstoffträger (102) durchzuführen;
- mindestens einen zyklonischen Oxidationsreaktor (3200, 3201, 3202, 3301, 3302, 3400), der dazu ausgestaltet ist, den aus dem Reduktionsreaktor kommenden reduzierten Sauerstoffträger (400, 440) durch Kontaktieren mit einem oxidierenden Gas (100, 130, 150, 180) zu oxidieren und den oxidierten Sauerstoffträger von dem an Sauerstoff abgereicherten oxidierenden Gas (110, 140, 160, 180, 190, 116) zu trennen;
- Leitungen zur Zirkulation des Sauerstoffträgers zwischen dem Reduktionsreaktor (2000) und dem mindestens einen zyklonischen Oxidationsreaktor (3200, 3201, 3202, 3301, 3302, 3400).

2. Anlage nach Anspruch 1, wobei der mindestens eine zyklonische Oxidationsreaktor umfasst:
- eine zylindrisch-konische Kammer, die einen zylindrischen oberen Abschnitt umfasst, der über einem umgekehrten kegelstumpfförmigen unteren Abschnitt liegt,
- eine Zuführleitung für ein Gasgemisch, das Partikel des Sauerstoffträgers und oxidierendes Gas beinhaltet, wobei die Zuführleitung mit einem Hauptinjektionskanal für oxidierendes Gas (100, 130, 150, 180) versehen ist und wobei die Zuführleitung in dem zylindrischen oberen Abschnitt mündet;
- eine Auslassleitung für einen an Sauerstoff abgereicherten gasförmigen Strom, die am oberen Ende des zylindrischen oberen Abschnitts positioniert ist;
- eine Abzugsleitung für einen Sauerstoffträgerpartikelstrom, die am Boden des umgekehrten kegelstumpfförmigen unteren Abschnitts positioniert ist.

3. Anlage nach einem der vorhergehenden Ansprüche, umfassend mehrere zyklonische Oxidationsreaktoren, die dazu ausgestaltet sind, seriell und/oder parallel zu arbeiten.

4. Anlage nach Anspruch 3, umfassend zwei zyklonische Oxidationsreaktoren, die dazu ausgestaltet sind, seriell zu arbeiten (3201, 3202, 3301, 3302).

5. Anlage nach Anspruch 3, die mindestens zwei zyklonische Oxidationsreaktoren umfasst, die dazu ausgestaltet sind, seriell zu arbeiten, und bei der die Auslassleitung eines zweiten zyklonischen Oxidationsreaktors (3302), der stromab eines ersten zyklonischen Oxidationsreaktors (3301) positioniert ist, an die Zuführleitung des ersten zyklonischen Oxidationsreaktors (3301) angeschlossen ist, um den Hauptinjektionskanal für oxidierendes Gas (180) zu bilden, das dem ersten zyklonischen Oxidationsreaktor (3301) zugeführt wird.

6. Anlage nach einem der vorhergehenden Ansprüche, wobei die Zuführleitung des mindestens einen zyklonischen Oxidationsreaktors mit mindestens einem Nebeninjektionskanal für oxidierendes Gas versehen ist, der bevorzugt an einer unteren Wand der Zuführleitung angeordnet ist.

7. Anlage nach einem der vorhergehenden Ansprüche, umfassend einen Zyklon (3002), der stromab angeordnet und direkt an den Reduktionsreaktor (2000) angeschlossen ist und dazu ausgestaltet ist, ein aus dem Reduktionsreaktor (2000) kommendes Gas/Feststoff-Gemisch (301) aufzunehmen und die Trennung zwischen dem reduzierten Sauerstoffträger (400) und den Verbrennungsrauchgasen (310) durchzuführen, wobei der Zyklon (3002) eine Auslassleitung für den reduzierten Sauerstoffträger (400) umfasst, die an den mindestens einen zyklonischen Oxidationsreaktor (3200, 3201, 3301) angeschlossen ist.

8. Anlage nach einem der vorhergehenden Ansprüche 1 bis 6, umfassend:
- eine Feststoff/Feststoff-Trennvorrichtung (3100), die stromab angeordnet und direkt an den Reduktionsreaktor (2000) angeschlossen ist, wobei die Feststoff/Feststoff-Trennvorrichtung (3100) dazu ausgestaltet ist, in Wirbelschicht zu arbeiten, ein aus dem Reduktionsreaktor (2000) hervorgegangenes Gas/Feststoff-Gemisch (301) aufzunehmen und die Trennung zwischen den Partikeln des reduzierten Sauerstoffträgers (440) und den Partikeln von Unverbranntem, die in dem Gas/Feststoff-Gemisch enthalten sind, durchzuführen, und
- mindestens einen Zyklon (3002), der stromab der Feststoff/Feststoff-Trennvorrichtung (3100) angeordnet ist und dazu ausgestaltet ist, einen gasförmigen Strom (601) aufzunehmen, der die Partikel von Unverbranntem umfasst, und die Trennung zwischen den Partikeln von Unverbranntem und den Verbrennungsrauchgasen (610) durchzuführen, wobei der Zyklon (3002) bevorzugt eine Auslassleitung für die Partikel von Unverbranntem umfasst, die an den Reduktionsreaktor (2000) angeschlossen ist.

9. Verfahren zur Chemical-Looping-Verbrennung eines kohlenwasserstoffhaltigen Einsatzmaterials, die einen partikelförmigen Sauerstoffträger-Feststoff einsetzt, bei dem:
- eine Verbrennung des kohlenwasserstoffhaltigen Einsatzmaterials durch Kontaktieren des Sauerstoffträgers in einem in Wirbelschicht arbeitenden Reduktionsreaktor (2000) durchgeführt wird;
- eine Oxidation des Sauerstoffträgers, der in dem Reduktionsreaktor (2000) verweilt hat, durch Kontaktieren mit einem oxidierenden Gas (100, 130, 150, 180), bevorzugt Luft, in mindestens einem zyklonischen Oxidationsreaktor (3200, 3201, 3202, 3301, 3302, 3400) durchgeführt wird und die Trennung zwischen dem oxidierten Sauerstoffträger und dem an Sauerstoff abgereicherten oxidierenden Gas in dem zyklonischen Oxidationsreaktor durchgeführt wird, bevor der oxidierte Sauerstoffträger zu dem Reduktionsreaktor (2000) zurückgeleitet wird.

10. Verfahren nach Anspruch 9, bei dem:
- ein oxidierendes Gas (100) und der Sauerstoffträger (400, 440), der aus dem Reduktionsreaktor (2000) hervorgegangen ist, in einer Zuführleitung des mindestens einen zyklonischen Oxidationsreaktors gemischt werden,
- das gasförmige Gemisch (120, 131, 181, 115), das den Sauerstoffträger umfasst, in einen zylindrischen oberen Abschnitt einer zylindrisch-konischen Kammer des zyklonischen Oxidationsreaktors geleitet wird, wobei die zylindrisch-konische Kammer den zylindrischen oberen Abschnitt umfasst, der über einem umgekehrten kegelstumpfförmigen unteren Abschnitt liegt;
- die Oxidation des Sauerstoffträgers in Kontakt mit dem oxidierenden Gas und die Trennung zwischen dem oxidierten Sauerstoffträger und dem an Sauerstoff abgereicherten oxidierenden Gas in dem zylindrisch-konischen Abschnitt durchgeführt werden;
- das an Sauerstoff abgereicherte oxidierende Gas (110, 140, 190, 116) durch eine Auslassleitung, die am oberen Ende des zylindrischen oberen Abschnitts positioniert ist, abgeführt wird;
- und ein Strom von oxidiertem Sauerstoffträger (102, 401) durch eine Abzugsleitung, die am Boden des umgekehrten kegelstumpfförmigen unteren Abschnitts positioniert ist, abgeführt wird.

11. Verfahren nach Anspruch 10, bei dem die Oxidation des Sauerstoffträgers (400, 440), der aus dem Reduktionsreaktor (2000) hervorgegangen ist, in zwei zyklonischen Oxidationsreaktoren (3201, 3202, 3301, 3302), die seriell und/oder parallel arbeiten, durchgeführt wird.

12. Verfahren nach Anspruch 11, bei dem das an Sauerstoff abgereicherte oxidierende Gas, das durch die Auslassleitung eines zweiten zyklonischen Oxidationsreaktors (3302) abgeführt wird, der stromab eines ersten zyklonischen Oxidationsreaktors (3301) positioniert ist, dazu verwendet wird, das gasförmige Gemisch in der Zuführleitung des ersten zyklonischen Oxidationsreaktors (3301) zu bilden und den Sauerstoffträger (400, 440), der aus dem Reduktionsreaktor (2000) hervorgegangen ist, in dem ersten zyklonischen Oxidationsreaktor (3301) zu oxidieren.

13. Verfahren nach einem der Ansprüche 9 bis 12, bei dem ein Gas/Feststoff-Gemisch (301, 601), das aus dem Reduktionsreaktor (2000) kommt, in einen Zyklon (3002) geleitet wird, der stromab angeordnet und direkt an den Reduktionsreaktor (2000) angeschlossen ist, um eine Trennung zwischen dem reduzierten Sauerstoffträger (400) und den Verbrennungsrauchgasen (310), die in dem Gas/Feststoff-Gemisch enthalten sind, durchzuführen, und der reduzierte Sauerstoffträger (400) zu dem mindestens einen zyklonischen Oxidationsreaktor (3200, 3201, 3301) geleitet wird.

14. Verfahren nach einem der Ansprüche 9 bis 12, bei dem das kohlenwasserstoffhaltige Einsatzmaterial ein partikelförmiges festes Einsatzmaterial (201) ist, das bevorzugt aus der Liste bestehend aus Kohle, Koks, Petrolkoks, Biomasse, Bitumensanden und Haushaltsabfällen gewählt ist, und bei dem:
- ein Gas/Feststoff-Gemisch (301), das aus dem Reduktionsreaktor (2000) kommt, in eine Feststoff/Feststoff-Trennvorrichtung (3100) geleitet wird, die direkt an den Reduktionsreaktor (2000) angeschlossen ist und in Wirbelschicht arbeitet, um die Trennung zwischen dem reduzierten Sauerstoffträger (440) und Partikeln von Unverbranntem, die in dem Gas/Feststoff-Gemisch enthalten sind, durchzuführen;
- in mindestens einen Zyklon (3002) ein gasförmiger Stoffstrom (601), der aus dem Feststoff/FeststoffAbscheider hervorgegangen ist und die Partikel von Unverbranntem umfasst, geleitet wird, um die Trennung zwischen den Partikeln von Unverbranntem (602) und Verbrennungsrauchgasen (610) durchzuführen;
- der reduzierte Sauerstoffträger (440) zu dem mindestens einen zyklonischen Oxidationsreaktor (3400) geleitet wird, bevorzugt mittels eines L-Ventils (4000);
- optional die Partikel von Unverbranntem (602) zu dem Reduktionsreaktor (2000) geleitet werden.

15. Verfahren nach einem der Ansprüche 9 bis 14, bei dem die Verweilzeit des Sauerstoffträgers in dem mindestens einen Oxidationsreaktor 30 Sekunden oder weniger beträgt.

## Claims

1. Chemical looping combustion plant for the combustion of a hydrocarbon feedstock using a solid-state oxygen carrier in the form of particles, comprising at least:
- a reduction reactor (2000) configured to operate as a fluidized bed and perform the combustion of said hydrocarbon feedstock (200, 201) in contact with said oxygen carrier (102);
- at least one cyclone oxidation reactor (3200, 3201, 3202, 3301, 3302, 3400) configured to oxidize said reduced oxygen carrier (400, 440) coming from said reduction reactor by bringing it into contact with an oxidizing gas (100, 130, 150, 180) and to separate said oxidized oxygen carrier from said oxygen-depleted oxidizing gas (110, 140, 160, 180, 190, 116);
- lines for circulating said oxygen carrier between said reduction reactor (2000) and said at least one cyclone oxidation reactor (3200, 3201, 3202, 3301, 3302, 3400) .

2. Plant according to Claim 1, wherein said at least one cyclone oxidation reactor comprises:
- a cylindrical-conical chamber comprising a cylindrical upper portion surmounting an inverted frustoconical lower portion;
- an inlet pipe carrying a gaseous mixture containing particles of the oxygen carrier and oxidizing gas, said inlet pipe being equipped with a main injection duct for the injection of oxidizing gas (100, 130, 150, 180) and said inlet pipe opening into said cylindrical upper portion;
- an outlet pipe for a stream of oxygen-depleted gas, this pipe being positioned at the top of the cylindrical upper portion;
- a discharge pipe for discharging a stream of particles of oxygen carrier, this pipe being positioned at the bottom of the inverted frustoconical lower portion.

3. Plant according to either one of the preceding claims, comprising several cyclone oxidation reactors configured to operate in series and/or in parallel.

4. Plant according to Claim 3, comprising two cyclone oxidation reactors (3201, 3202, 3301, 3302) configured to operate in series.

5. Plant according to Claim 3, comprising at least two cyclone oxidation reactors configured to operate in series, and wherein the outlet pipe of a second cyclone oxidation reactor (3302) positioned downstream of a first cyclone oxidation reactor (3301) is connected to the inlet pipe of said first cyclone oxidation reactor (3301) to form the main injection duct for the injection of oxidizing gas (180) fed to said first cyclone oxidation reactor (3301).

6. Plant according to any one of the preceding claims, wherein the inlet pipe of said at least one cyclone oxidation reactor is equipped with at least one secondary oxidizing-gas injection duct, preferably situated on a lower wall of said inlet pipe.

7. Plant according to any one of the preceding claims, comprising a cyclone (3002) positioned downstream of and connected directly to said reduction reactor (2000), configured to receive a gas/solid mixture (301) coming from said reduction reactor (2000) and to perform separation between the reduced oxygen carrier (400) and combustion flue gases (310), said cyclone (3002) comprising an outlet pipe for the reduced oxygen carrier (400), this pipe being connected to said at least one cyclone oxidation reactor (3200, 3201, 3301).

8. Plant according to any one of Claims 1 to 6, comprising:
- a solid/solid separation device (3100) positioned downstream of and connected directly to said reduction reactor (2000), said solid/solid separation device (3100) being configured to operate as a fluidized bed, to receive a gas/solid mixture (301) coming from said reduction reactor (2000), and to perform separation between the particles of the reduced oxygen carrier (440) and unburnt particles contained in said gas/solid mixture, and
- at least one cyclone (3002) positioned downstream of said solid/solid separation device (3100) and configured to receive a stream of gas (601) containing said unburnt particles and to perform separation between said unburnt particles and combustion flue gases (610), said cyclone (3002) preferably comprising an outlet pipe for said unburnt particles, which pipe is connected to said reduction reactor (2000).

9. Chemical looping combustion method for the combustion of a hydrocarbon feedstock using a solid-state oxygen carrier in the form of particles, wherein:
- the hydrocarbon feedstock is burnt by bringing it into contact with the oxygen carrier in a reduction reactor (2000) operating as a fluidized bed;
- the oxygen carrier that has passed through the reduction reactor (2000) is oxidized by bringing it into contact with an oxidizing gas (100, 130, 150, 180), preferably air, in at least one cyclone oxidation reactor (3200, 3201, 3202, 3301, 3302, 3400), and said oxidized oxygen carrier and the oxygen-depleted oxidizing gas are separated in said cyclone oxidation reactor before said oxidized oxygen carrier is returned to the reduction reactor (2000).

10. Method according to Claim 9, wherein:
- an oxidizing gas (100) and the oxygen carrier (400, 440) coming from the reduction reactor (2000) are mixed in an inlet pipe of said at least one cyclone oxidation reactor;
- said gaseous mixture (120, 131, 181, 115) containing the oxygen carrier is sent into a cylindrical upper portion of a cylindrical-conical chamber of said cyclone oxidation reactor, said cylindrical-conical chamber comprising the cylindrical upper portion surmounting an inverted frustoconical lower portion;
- said oxygen carrier is oxidized in contact with the oxidizing gas and the oxidized oxygen carrier and the oxygen-depleted oxidizing gas are separated within said cylindrical-conical chamber;
- said oxygen-depleted oxidizing gas (110, 140, 190, 116) is discharged via an outlet pipe positioned at the top of the cylindrical upper portion;
- and a stream of oxidized oxygen carrier (102, 401) is discharged via a discharge pipe positioned at the bottom of the inverted frustoconical lower portion.

11. Method according to Claim 10, wherein the oxygen carrier (400, 440) coming from the reduction reactor (2000) is oxidized in two cyclone oxidation reactors (3201, 3202, 3301, 3302) operating in series and/or in parallel.

12. Method according to Claim 11, wherein the oxygen-depleted oxidizing gas discharged via the outlet duct of a second cyclone oxidation reactor (3302) positioned downstream of a first cyclone oxidation reactor (3301) is used to form the gaseous mixture in the inlet pipe of said first cyclone oxidation reactor (3301) and to oxidize the oxygen carrier (400, 440) coming from the reduction reactor (2000) within said first cyclone oxidation reactor (3301).

13. Method according to any one of Claims 9 to 12, wherein a gas/solid mixture (301, 601) coming from the reduction reactor (2000) is sent to a cyclone (3002) positioned downstream of and connected directly to said reduction reactor (2000) in order to separate the reduced oxygen carrier (400) from the combustion flue gases (310) contained in said gas/solid mixture, and the reduced oxygen carrier (400) is sent to said at least one cyclone oxidation reactor (3200, 3201, 3301).

14. Method according to any one of Claims 9 to 12, wherein the hydrocarbon feedstock is a solid feedstock in the form of particles (201), preferably selected from the list consisting of coal, coke, petcoke, biomass, oil sands and household waste, and wherein:
- a gas/solid mixture (301) coming from the reduction reactor (2000) is sent to a solid/solid separation device (3100) connected directly to said reduction reactor (2000) and operating as a fluidized bed in order to separate the reduced oxygen carrier (440) from the unburnt particles contained in said gas/solid mixture;
- a stream of gas (601) coming from the solid/solid separator and containing said unburnt particles is sent to at least one cyclone (3002) in order to separate said unburnt particles (602) from the combustion flue gases (610);
- the reduced oxygen carrier (440) is sent to said at least one cyclone oxidation reactor (3400), preferably by means of an L-ported valve (4000);
- optionally, said unburnt particles (602) are sent to said reduction reactor (2000).

15. Method according to any one of Claims 9 to 14, wherein the residence time of the oxygen carrier in said at least one oxidation reactor is less than or equal to 30 seconds.
